# FASCICULE DE BREVET EUROPEEN

(11) **EP 1 873 615 B1**
(45) Date de publication et mention de la délivrance du brevet: **31.08.2016**
(21) Numéro de dépôt: 07290743.9
(22) Date de dépôt: 14.06.2007
(51) Int. Cl.: G06F 1/26

(54) **Dispositif pour économiser la consommation en veille d'un groupe fonctionnel d'appareils**
Vorrichtung zur Einsparung des Standby-Verbrauchs einer Geräteanordnung
Device for reducing standby mode power consumption of a functional group of devices

(30) Priorité: 23.06.2006 FR 0605627
(43) Date de publication de la demande: 02.01.2008
(73) Titulaire: Ergylink, 92300 Levallois-Perret (FR)
(72) Inventeur: Gilbert, Jérôme, 92300 Levallois-Perret (FR)

(56) Documents cités:
- EP-A- 0 967 695
- EP-A2- 0 376 495
- DE-U1- 9 410 498
- DE-U1- 20 319 827
- US-A1- 2005 007 712
- US-B1- 6 476 729

## Description

### Domaine technique

La présente invention concerne un moyen pour économiser l'énergie. Plus particulièrement, la présente invention concerne un adaptateur universel pour économiser l'énergie électrique et pour le cas échéant offrir des fonctions annexes complémentaires lorsque des appareils tels que des ordinateurs ou des téléviseurs sont arrêtés en veille.

### Techniques antérieures

Il existe des coupe-veilles sur le marché, ces appareils présentent de nombreux inconvénients notamment pour certains, des risques de détérioration des appareils raccordés. Il existe deux catégories principales de coupe-veilles, les coupe-veilles fonctionnant sur le mode maître-esclave et les coupe-veilles spécialisés pour un type d'application donné. On trouve notamment dans la seconde catégorie, des coupe-veille destinés aux équipements audiovisuels, tel que décrit dans le document DE9410498 ou encore exploitant les signaux émis par les télécommandes de ces équipements comme par exemple le dispositif décrit dans le brevet JP2001268654 de Sony.

Les coupe-veille maître-esclave à l'état de l'art, comme l'illustre la demande de brevet publiée sous le numéro US2005/007712, comprennent généralement un relais de commutation des charges dites esclaves dont la commutation est asservie au courant consommé par la charge dite maîtresse qui reste toujours connectée au réseau électrique. Au dessus d'un seuil de consommation de la charge maîtresse, qui peut être réglable ou non par l'utilisateur, le relais se ferme et au dessous d'un seuil, le relais s'ouvre. Ce type de produit pourrait a priori aussi bien être utilisé dans l'environnement du micro-ordinateur que dans celui du téléviseur mais dans la pratique on constate que les coupe-veilles à l'état de l'art ne fonctionnent pas bien avec certains modèles d'ordinateurs et/ou de téléviseurs. Des coupes veille à l'état de l'art peuvent même se révéler dangereux pour les appareils raccordés dans certaines conditions de fonctionnement en ce qu'ils peuvent entrer dans des cycles sans fin de mise sous tension et de mise hors tension pouvant provoquer la destruction des appareils raccordés.

On observe généralement dans les dispositifs à l'état de l'art les inconvénients suivants :
- Une spécialisation des coupe-veille en fonction du type d'équipement externe à raccorder,
- une certaine dépendance des seuils de déclenchement et des temporisations avec la forme d'onde du courant circulant dans la charge maîtresse,
- une précision insuffisante sur les seuils de commutation et les temporisations,
- un hystérésis insuffisant pouvant engendrer des commutations mal maîtrisées,
- l'impossibilité de corriger des anomalies fonctionnelles telles que des boucles infinies de mise en marche et à l'arrêt pouvant s'observer par exemple avec certains adaptateurs DVB-T et certains téléviseurs dont le passage de l'état marche à veille et veille à marche est asservi à l'état d'un signal provenant du téléviseur,
- dans le cas des modèles maître-esclave, une charge maîtresse qui reste alimentée en permanence ce qui réduit les économies réalisables, la longévité de l'appareil et la sécurité en augmentant les risques d'incendie,
- une consommation propre d'énergie active non négligeable qui réduit l'économie réalisée par l'introduction du coupe-veille et augmente le temps de retour sur investissement pour le client,
- une fragilité du coupe-veille relativement aux pointes de courant pouvant être absorbées par les appareils externes lors de leur mise sous tension.

Les coupe-veilles à l'état de l'art, spécialisés pour les téléviseurs, et qui exploitent les signaux de télécommande en en décodant la signification pour détecter les ordre de mise en marche ou de mise en veille, présentent l'inconvénient majeur du manque de compatibilité avec l'ensemble du parc de téléviseurs. Cet inconvénient est en partie levé dans des appareils qui nécessitent un apprentissage préalable des codes de télécommande mais il est néanmoins difficile d'être compatible avec tous les standards car certains se différencient aussi au niveau physique par exemple par la fréquence porteuse de la modulation et/ou par la longueur d'onde infrarouge. En outre, cette opération d'apprentissage complique notablement l'utilisation d'un produit qui doit rester simple en vue d'une large diffusion auprès du grand public.

Des modèles simplifiés de coupe-veille pour téléviseurs ne détectent que la présence d'un signal infrarouge modulé et présentent plusieurs inconvénients dont celui de nombreux faux départs par détections de signaux intempestifs allant même jusqu'à prendre comme signal de mise en marche une brutale variation du niveau d'éclairage en lumière visible, en particulier lorsque les sources lumineuses sont du type à basse consommation dont la particularité est d'émettre dans un large spectre.

En outre, la spécialisation des coupe-veilles à l'état de l'art en fonction du type de groupe fonctionnel à raccorder conduit à multiplier les références à industrialiser, à stocker et à vendre ce qui est peu efficace sur le plan économique.

### Exposé de l'invention

Le but de la présente invention est de remédier à au moins une partie de ces problèmes en proposant un dispositif coupe-veille universel agencé pour fonctionner avec la plupart des types de groupes fonctionnels d'appareils, au moins avec certains ordinateurs et avec au moins certains téléviseurs et leur périphériques respectifs, et qui met hors tension l'appareil principal du groupe fonctionnel au même titre que les éventuels appareils secondaires.

Le but de l'invention est atteint au moyen d'un dispositif tel qu'énoncé à la revendication 1.

Le dispositif selon l'invention permet en outre de prolonger la durée de vie des appareils raccordés et de réduire les risques d'incendie en retirant du réseau électrique les appareils non utilisés. Le fait de déconnecter les appareils non utilisés du réseau électrique réduit leur exposition aux perturbations à haute énergie qui peuvent les dégrader. Le fonctionnement du dispositif induit par ailleurs une réduction du stress subi par les composants de puissance d'au moins l'appareil principal en le mettant en marche à partir d'une mise sous tension préalable en mode veille.

On entend par groupe fonctionnel d'appareils, des appareils susceptibles de fonctionner ensemble pour offrir le service attendu. Un groupe fonctionnel d'appareils au sens de l'invention comprend en outre un appareil dit principal et des appareils secondaires associés. Le groupe fonctionnel peut se réduire à un seul appareil qui dans ce cas particulier est aussi ledit appareil principal sans sortir du cadre de l'invention. Le groupe fonctionnel d'appareils comprend au moins un appareil externe au dispositif selon l'invention. Un premier exemple de groupe fonctionnel est le micro-ordinateur avec ses périphériques. Dans cet exemple, l'appareil principal est l'unité centrale, les appareils secondaires associés pouvant être l'écran, les haut-parleurs amplifiés, l'imprimante, le scanner, le modem etc. Un autre exemple de groupe fonctionnel est le pôle audiovisuel comprenant en tant qu'appareil principal par exemple le téléviseur, le projecteur vidéo ou tout autre moyen de visualisation et pouvant comprendre en tant qu'appareils secondaires associés un lecteur de DVD, une set top box, un récepteur pour télévision numérique terrestre, un récepteur pour télévision par satellite, un amplificateur « home cinéma » etc. Bien entendu, on ne sort pas du cadre de l'invention si un autre appareil du groupe fonctionnel est choisi comme appareil principal. De même il est possible de raccorder plusieurs appareils en parallèle sur la prise prévue pour l'appareil principal si l'on souhaite réaliser des combinaisons fonctionnelles particulières. Il peut s'agir par exemple de connecter en parallèle, en tant « qu'appareil principal composite », un téléviseur et un enregistreur vidéo numérique (Digital Video Recorder en langue anglaise). Cet arrangement permet au dispositif selon l'invention d'alimenter l'ensemble du groupe fonctionnel tant qu'au moins l'un des deux n'est pas en standby. Ceci est avantageux par exemple dans le cas d'un DVR équipé d'un disque dur ne devant pas être déconnecté du secteur sans mener à son terme une procédure d'arrêt (« shut down » en langue anglaise). Dans cet exemple, on peut arrêter le téléviseur d'abord sans se préoccuper du DVR, c'est l'arrêt complet du DVR par lui-même, détectée par le coupe veille, qui coupera l'alimentation de l'ensemble du groupe fonctionnel.

Bien entendu l'invention n'est pas limitée au cas des ordinateurs et des téléviseurs, elle peut être également avantageusement utilisée dans un contexte d'appareils audio et plus généralement avec tout produit ou groupes de produits susceptibles d'économiser de l'énergie par sa mise en oeuvre.

Le dispositif selon l'invention comprend des moyens de mesure donnant une information représentative de la puissance consommée par ledit groupe fonctionnel d'appareils, des moyens de comparaison de cette information avec un seuil prédéterminé, des moyens de commutation de puissance pour alimenter ou non le groupe fonctionnel d'appareils, des moyens pour alimenter les ressources internes du dispositif selon l'invention, des moyens de connexion au réseau électrique, et d'autres moyens de connexion pour alimenter au moins un appareil externe.

Suivant un autre aspect de l'invention, le dispositif coupe-veille est caractérisé en ce qu'il comprend des moyens pour que l'utilisateur puisse commander la mise sous tension dudit groupe fonctionnel d'appareils dont au moins un de ces moyens est exclusivement dédié au dispositif selon l'invention, des moyens pour maintenir inconditionnellement l'état sous tension dudit groupe fonctionnel d'appareils pendant un temps prédéterminé, et des moyens de prise de décision pour maintenir l'état sous tension dudit groupe fonctionnel d'appareils tant que la puissance consommée est supérieure à un seuil prédéterminé et pour mettre automatiquement hors tension ledit groupe fonctionnel d'appareils quand la puissance consommée est inférieure à un seuil prédéterminé.

Les seuils de prise de décision pour le maintien sous tension des appareils externes et pour leur mise hors tension peuvent être confondus ou différenciés selon les choix de mise en oeuvre sans sortir du cadre de l'invention. Pour simplifier la description des exemples qui suivent, on choisira par défaut l'option d'une prise décision autour d'un seuil unique selon que l'on se trouve au dessus ou en dessous.

Les moyens pour que l'utilisateur puisse commander la mise sous tension dudit groupe fonctionnel d'appareils sont, pour au moins l'un d'entre eux, exclusivement dédiés au dispositif selon l'invention. Les moyens de commande exclusivement dédiés au dispositif selon l'invention peuvent être par exemple un bouton poussoir sur le dispositif lui même. Ce bouton poussoir peut être avantageusement lui même déporté, ou complété par un second moyen de commande déporté, relié au dispositif par un câble ou par une liaison sans fil spécifique par exemple par radio ou infrarouge pour en faciliter l'utilisation. D'autres moyens de commande spécifiques au dispositif selon l'invention peuvent être mis en oeuvre comme par exemple, un détecteur de signaux acoustiques caractéristiques tels qu'un sifflement ou un claquement de main ou encore des moyens de reconnaissance vocale pouvant être simplifiés jusqu'à éventuellement ne reconnaître qu'un mot.

Au delà d'au moins un moyen de commande exclusivement dédié au dispositif selon l'invention, il peut être avantageusement ajouté un ou plusieurs autres moyens de commandes partagés avec d'autres équipements. L'exemple type du moyen de commande partagé est un récepteur de signaux infrarouges susceptible d'exploiter les signaux émis par les télécommandes des équipements audiovisuels standards. Parmi les télécommandes d'équipements audiovisuels possibles, celle du téléviseur raccordé au dispositif en tant qu'appareil principal offre l'avantage supplémentaire de permettre à l'utilisateur de réaliser dans la même action la mise sous tension du groupe fonctionnel d'appareils raccordé au dispositif selon l'invention et la commande du passage de l'appareil principal de l'état de veille à l'état de marche pour maintenir le groupe fonctionnel sous tension. Il est possible sans sortir du cadre de l'invention d'exploiter la signification des ordres envoyés par les télécommandes, soit par mise en mémoire en usine des principaux codages devant être interprétés comme commande de mise en marche, soit par un apprentissage préalable réalisé par l'utilisateur du code transmis par sa télécommande. Il est cependant avantageux d'exploiter le signal infrarouge sans en décoder la signification pour rendre le dispositif selon l'invention indépendant des standards de codage de l'information transmise. La mise en oeuvre d'un microcontrôleur permet de différencier efficacement le signal infrarouge utile de tous signaux parasites tels que ceux émis par les sources lumineuses fluorescentes ou par le rayonnement solaire. Des moyens analogiques simples peuvent cependant être mis en oeuvre pour réaliser le dispositif selon l'invention de manière satisfaisante. Ainsi, une électronique analogique de filtrage simple à la sortie d'un récepteur infrarouge intégré que complète un montage mécanique approprié du détecteur pour en augmenter la directivité ainsi que la pose d'un filtre optique devant le capteur donne de bons résultats.

Des moyens seront avantageusement ajoutés pour inhiber la mise en marche du groupe fonctionnel au moyen d'une télécommande. En effet, la mise en marche par télécommande est un avantage dans un contexte d'utilisation en périphérie d'équipements audiovisuels. Cette même capacité peut être problématique en périphérie d'équipements informatiques. La mise en marche possible par réception de signaux infrarouges peut conduire à des démarrages intempestifs du groupe fonctionnel informatique par la réception de parasites, Des perturbations fonctionnelles sont également possibles lorsque les équipements émettent périodiquement des signaux par exemple par des ports IrDA. Les moyens pour contrôler l'inhibition de la mise en marche par la réception de signaux de télécommande seront avantageusement de nature programmatique dans une mise en oeuvre numérique de l'invention. L'utilisateur peut ainsi paramétrer le comportement du dispositif selon l'invention au regard des signaux de télécommande reçus en inhibant ou en activant leur prise en compte pour la mise en marche du groupe fonctionnel. D'autres moyens peuvent être utilisés pour inhiber la mise en marche par télécommande sans sortir du cadre de l'invention tels que des moyens de nature électrique par exemple en déconnectant ou en court-circuitant la sortie du sous ensemble de réception. L'inhibition peut aussi reposer sur des moyens mécaniques et/ou optiques pour occulter la captation du signal.

Des moyens seront avantageusement ajoutés pour adapter la sélectivité du dispositif vis-à-vis des signaux infrarouges émis par les télécommandes de l'utilisateur. L'enveloppe des signaux infrarouges est différente selon les protocoles utilisés. L'optimisation des traitements en fonction des types de télécommande susceptibles d'être utilisés améliore de manière significative le filtrage des signaux parasites par rapport à une solution universelle. Ceci étant particulièrement pertinent dans une mise en oeuvre numérique de l'invention, il s'agira avantageusement d'une possibilité de paramétrage approprié offerte à l'utilisateur.

Dans une variante de mise en oeuvre particulièrement avantageuse, la mise en marche du groupe fonctionnel par télécommande repose sur une séquence d'actions à distance prédéterminées dans le respect de contraintes temporelles prédéterminées. Par exemple, un premier appui sur une touche de télécommande suivi par un temps d'attente d'une durée prédéterminée puis par un second appui sur une touche dans une fenêtre temporelle prédéterminée. Cette solution est avantageuse en ce qu'elle permet de relâcher les contraintes de sélectivité de l'enveloppe du signal pour plus grande universalité vis-à-vis des protocoles de télécommande tout en renforçant de manière significative le filtrage des mises en marche intempestives.

Un complément de mise en oeuvre avantageux de la mise en marche par une séquence d'actions à distance repose sur le guidage de l'utilisateur par une information sensorielle par exemple pour indiquer l'ouverture de la fenêtre temporelle associée à l'action suivante. Par exemple un signal sonore et/ou lumineux peut indiquer la prise en compte de l'action à distance venant d'être effectuée et/ou le moment opportun pour réaliser l'action suivante attendue dans la séquence. Eventuellement le rejet qu'une séquence avortée et le retour aux conditions initiales peut être aussi signalé.

Dans un mode de mise en oeuvre particulièrement avantageux, il est possible d'améliorer l'universalité du coupe-veille relativement aux puissances des appareils raccordés. Ceci est particulièrement utile dans le cas où la puissance cumulée des appareils dits secondaires à laquelle s'ajoute la consommation en veille de l'appareil dit principal est supérieure ou égale au seuil de puissance en dessous duquel il faut être pour que la mise à l'arrêt soit décidée. La solution proposée consiste à ne mesurer que la puissance consommée par l'appareil principal en ne prenant pas en compte celle des appareils secondaires. Cette variante de l'invention repose sur une solution de câblage interne qui cumule les avantages d'une commutation de puissance commune à l'ensemble des appareils du groupe fonctionnel avec les avantages d'une mesure séparée ne concernant que ledit appareil principal. Dans cette version de l'invention il est nécessaire d'offrir en outre des moyens de connexion spécifiques et identifiés comme tels pour l'appareil dit principal.

Selon un autre aspect de l'invention, les moyens de mesure embarqués comprennent des moyens pour intégrer ou moyenner le signal mesuré sur une durée suffisante pour rendre le dispositif peu sensible à la forme d'onde du courant circulant dans la charge externe sur laquelle porte la mesure. Cette charge externe pouvant être constituée d'une pluralité d'appareils ou du seul appareil dit principal au sein de cette pluralité. En effet, il existe une grande diversité de caractéristiques de forme d'onde de courant générées par les alimentations intégrées dans les appareils susceptibles d'être raccordés au dispositif selon l'invention. Certaines alimentations à découpage engendrent des pointes de courant de faible durée mais de grande amplitude qui perturbent les coupe-veilles à l'état de l'art en ce qu'ils détectent une puissance apparente nettement supérieure à la puissance moyenne réellement consommée par l'appareil. Dans un mode de réalisation analogique, ce problème sera avantageusement résolu par une ou plusieurs cellules d'intégration comme par exemple des réseaux RC ou intégrateurs à amplificateur opérationnel. Dans un mode de réalisation numérique, la mesure sera moyennée pendant un temps suffisamment long pour refléter la puissance moyenne et ceci de manière synchrone ou asynchrone par rapport à la fréquence du courant. Compte tenu des temps de réaction relativement long qui sont recherchés pour un bon fonctionnement du dispositif, le plus simple sera de moyenner le signal de manière asynchrone sur un temps très supérieur à un cycle du courant alternatif, par exemple sur 10 secondes de sorte que quelques demi-périodes de plus ou de moins ne changent pas notablement le résultat moyenné.

Les coupe-veilles à l'état de l'art, surtout ceux dédiés aux téléviseurs, intègrent une alimentation par transformateur abaisseur de tension pour alimenter leurs ressources internes. Non seulement un transformateur est plus coûteux et encombrant qu'un condensateur, mais il a une consommation de puissance active non négligeable, qui de surcroît est comptabilisée par le compteur électrique de l'utilisateur, ce qui va à l'encontre de l'économie recherchée. Par ailleurs, les transformateurs de très petite puissance ont un fil si fin au primaire que cela devient un composant peu fiable susceptible de tomber en panne à la moindre surcharge. Le dispositif selon l'invention intégrera avantageusement une alimentation capacitive comprenant au moins un condensateur comme élément série destiné à faire chuter la tension du réseau électrique.

Selon un autre aspect de l'invention, il peut être avantageusement ajouté une temporisation additionnelle de longue durée pour maintenir sous tension les appareils externes après la détection des conditions d'arrêt basées sur le passage du niveau de la puissance consommée par ledit groupe fonctionnel d'appareils ou par l'appareil dit principal au sein de ce groupe en dessous du seuil de prise de décision d'arrêt et l'arrêt effectif de l'alimentation des appareils externes raccordés. La temporisation de longue durée additionnelle selon l'invention est réinitialisée et activée lors de l'apparition des conditions d'arrêt et automatiquement désactivée ou inhibée quand la puissance consommée est au dessus du seuil de prise de décision d'arrêt. Cette temporisation peut s'avérer particulièrement utile quand le dispositif selon l'invention est utilisé dans le cadre d'un pôle informatique. En effet, il devient ainsi possible d'exploiter les possibilités de mises en veilles sophistiquées de l'ordinateur, avec le redémarrage rapide qu'elles permettent, dans le cadre de périodes de non-utilisation de courte et de moyenne durée. Pour les longues périodes de non-utilisation, le dispositif selon l'invention coupe complètement l'alimentation du groupe fonctionnel à l'arrivée à échéance de la temporisation de longue durée additionnelle.

Le dispositif selon l'invention comprend en outre avantageusement des moyens pour régler la durée de la temporisation de longue durée additionnelle pour l'ajuster au besoin. Les durées envisageables peuvent aller par exemple d'une minutes à plusieurs heures. La mise en oeuvre d'un microcontrôleur simplifie la gestion de temporisations de longue durée. Les moyens mis en oeuvre pour régler la durée de la temporisation pourront être par exemple un commutateur à au moins deux positions, un potentiomètre ou une résistance variable ou encore un simple bouton poussoir associé à une séquence d'actions appropriées de la part de l'utilisateur. Par exemple un appui d'une durée particulière sur un bouton de réglage et/ou encore un appui pendant dans une fenêtre temporelle déterminée telle que par exemple lors de la mise sous tension de l'appareil initialise la procédure de réglage de la temporisation. La fixation de la durée souhaitée, par exemple allant de 1 à 60 minutes, se fait ensuite par autant d'appuis que de blocs temporels unitaires de par exemple une minute. La validation du réglage effectué et sa mise ne mémoire non volatile peut être explicite par exemple par un appui continu d'une durée supérieure à une valeur déterminée ou implicite à l'arrivée à échéance d'une temporisation d'inactivité après le dernier appui. Bien entendu ces exemples ne sont pas limitatifs, bien d'autres moyens de réglages sont possibles sans sortir de l'invention en particulier dans les variantes de mise en oeuvre du dispositif les plus élaborées incluant des moyens d'affichage et de réglage pour d'autres paramètres de fonctionnement.

Certaines marques de téléviseur ont fait le choix d'asservir le passage du mode veille au mode marche à la présence d'un signal sur l'entrée dite de commutation lente de la prise SCART / Péritel (broche 8). Lorsque certains appareils tels que des récepteurs de télévision numérique terrestre externes sont raccordés au téléviseur par la prise péritel, il peut s'ensuivre des dysfonctionnements majeurs avec des coupe-veilles à l'état de l'art tels que des boucles sans fin d'allumage et d'extinction des appareils pouvant aller jusqu'à leur destruction si l'on y met pas fin en les débranchant. Le dispositif selon l'invention comprendra avantageusement des moyens pour empêcher une nouvelle mise sous tension du groupe fonctionnel d'appareils avant que ne se soit écoulé un temps suffisant après sa mise à l'arrêt. Une temporisation inhibant toute nouvelle mise sous tension après un arrêt, d'une durée par exemple comprise entre 15 et 30 seconde est suffisante pour garantir qu'aucun redémarrage intempestif ne peut avoir lieu alors que les conditions d'arrêt ont été réunies.

La plupart des coupe-veilles à l'état de l'art évaluent la puissance consommée par les charges externes en en mesurant le courant par la chute de tension aux bornes d'une résistance dont l'excursion est limitée par la présence de deux diodes montées tête-bêche en parallèle, formant un circuit dit de « clamping bilatéral », aux bornes de la résistance. Cet assemblage offre l'avantage de pouvoir utiliser une résistance ayant une valeur assez élevée pour délivrer une tension relativement importante dans la zone linéaire avant l'écrêtage sans que la résistance ait à dissiper beaucoup de puissance. Des composants de relativement faible puissance, de faible encombrement et à faible coût peuvent alors être utilisés. L'inconvénient de cet assemblage mettant en oeuvre deux semi-conducteurs est sa grande fragilité vis à vis des surtensions et des pointes de courant pouvant être appelées par la charge. Le dispositif selon l'invention comprendra avantageusement un circuit de puissance ne mettant en oeuvre que des composants passifs, tant pour la mesure de courant circulant dans les charges externes que pour la commutation de ces charges. La commutation de puissance utilisera un relais électromécanique convenablement dimensionné pour supporter des pointes de courant importantes lors de la mise sous tension de certains appareils externes. La mesure de courant au sein du dispositif selon l'invention se fera par mesure de la chute de tension aux bornes d'une résistance de puissance dimensionnée en fonction de la puissance maximale de la charge souhaitée. Pour rester dans un encombrement, des coûts et un échauffement raisonnable de la résistance « shunt » de mesure, une chaîne d'amplification ayant un gain relativement important sera mise en oeuvre dans un choix de mise en oeuvre analogique. Dans un choix de mise en oeuvre numérique, un convertisseur analogique numérique offrant une résolution suffisante à partir d'une tension de référence la plus basse possible ou un convertisseur moins performant mais précédé d'un étage d'amplification pourra être mis en oeuvre.

Les coupe-veilles à l'état de l'art qui offrent un réglage des seuils de commutation, le font au moyen d'un potentiomètre analogique. Il est difficile pour l'utilisateur de trouver la position du potentiomètre qui convient à ses appareils entre les deux situations extrêmes, celle où le coupe-veille ne peut pas mettre sous tension les appareils externes et celle où il ne peut pas les arrêter.

Un raffinement de l'invention consiste à remplacer le moyen de réglage analogique par un moyen de réglage discret des seuils de prise de décision à au moins deux positions. Le réglage devient ainsi plus simple à comprendre pour l'utilisateur en particulier si les positions sont associées à des marquages renvoyant à un choix entre petit ou gros appareil principal, entre petit ou grand écran (TV), portable ou fixe (ordinateur), haute ou basse sensibilité etc. Un mode opératoire encore plus simple consiste à entrer dans une logique du type « si ça ne fonctionne pas dans cette position, essayez l'autre ». Dans certains modes de réalisation de l'invention, il peut être avantageux d'utiliser un capteur de position interne en tant que moyen de réglage à deux états. Il suffit dans ce cas par exemple de retourner le boîtier du dispositif pour passer d'une valeur de réglage à l'autre sans qu'il soit nécessaire de faire sortir du boîtier une quelconque partie du moyen de réglage ce qui facilite l'obtention d'une parfaite sécurité électrique. On reste bien entendu dans le cadre de l'invention si le dispositif comprend un moyen de réglage discret à plus de deux positions, par exemple à trois voir à quatre positions.

Dans une mise en oeuvre du dispositif selon l'invention faisant appel à des techniques numériques, il est particulièrement avantageux de remplacer un moyen de réglage physique des seuils de commutation par une phase d'apprentissage préalable à la mise en fonction du dispositif.

Dans le cas où le dispositif selon l'invention met en oeuvre une prise spécifique pour l'appareil principal à laquelle est raccordé exclusivement le circuit de mesure, l'invention prévoie qu'il est avantageux de déterminer le seuil de commutation à partir d'au moins la mesure préalable d'une grandeur représentative de la puissance consommée en veille. Dans ce cas le seuil de commutation sera obtenu à partir de la valeur mesurée en lui ajoutant une grandeur (offset en langue Anglaise) de valeur constante ou en relation avec la valeur mesurée, par exemple 5% de la valeur mesurée. L'offset peut être le résultat d'un calcul ou encore être une valeur discrète par exemple obtenue à l'aide d'une table de correspondance. Dans l'une des variantes préférées de mise en oeuvre de l'invention, la phase d'apprentissage repose sur la mesure de consommations en veille et la mesure de consommation en marche de l'appareil principal et sur le calcul du ou des seuils de commutation en fonction des deux valeurs obtenues. Le seuil de prise de décision peut être calculé entre ces deux valeurs, par exemple à partir de la moyenne arithmétique de la consommation en veille et de la consommation en marche. La valeur obtenue est stockée dans une mémoire non volatile pour une exploitation du dispositif selon l'invention dans les meilleures conditions d'adaptation aux caractéristiques de l'appareil raccordé. Ceci est particulièrement utile lorsque les formes d'ondes du courant appelé par l'appareil principal varie de manière importante entre les modes marche et standby. En effet, il est possible de mettre en oeuvre l'invention à partir de moyens de mesure de courant simplifiés à faible coût dont les résultats sont influencés par de la forme d'onde du courant. La prise en compte des valeurs en marche et en veille permet avantageusement de compenser et de masquer d'éventuelles anomalies liées à l'effet de la forme d'onde du courant sur sa mesure et ainsi arriver au même résultat fonctionnel qu'en utilisant des moyens plus sophistiqués de mesure de courant indépendants de la forme d'onde.
Dans le cas où le dispositif selon l'invention ne met pas en oeuvre de prise spécifique pour l'appareil principal et où le circuit de mesure est raccordé à l'ensemble des appareils du groupe fonctionnel, on évaluera la différence que représente le passage dudit appareil principal de l'état veille à marche. C'est l'augmentation ou la diminution instantanée de la consommation totale en cours, d'une valeur calculée à partir d'au moins une mesure préalable d'au moins la consommation en marche de l'appareil principal à laquelle on soustraira un offset, que sera associée la prise de décision. Dans ce cas, le seuil de prise de décision sera obtenu à partir de la valeur mesurée en lui retranchant une grandeur (offset en langue Anglaise) de valeur constante ou d'une grandeur en relation avec la valeur mesurée, par exemple 30% de la valeur mesurée. L'offset peut être le résultat d'un calcul ou encore être une valeur discrète par exemple obtenue à l'aide d'une table de correspondance. Dans l'une des variantes préférées de mise en oeuvre de l'invention, la phase d'apprentissage repose sur la mesure de consommations en veille et la mesure de consommation en marche de l'appareil principal et sur le calcul du ou des seuils de commutation en fonction des deux valeurs obtenues. Le seuil de prise de décision peut être calculé entre ces deux valeurs, par exemple aux trois quarts de la différence entre la consommation en marche et la consommation en veille. La valeur obtenue est stockée dans une mémoire non volatile pour une exploitation du dispositif selon l'invention dans les meilleures conditions d'adaptation aux caractéristiques de l'appareil raccordé.
L'invention prévoie en outre des moyens pour mettre automatiquement hors tension ledit groupe fonctionnel d'appareils y compris ledit appareil principal quand la puissance consommée est supérieure à un seuil prédéterminé en fonction d'au moins une caractéristique du dispositif. Il s'agit d'une fonction de protection du circuit de mesure du dispositif qui est avantageuse en ce qu'elle est réinitialisable et qu'elle évite l'utilisation d'un ou plusieurs composants physiques pour le protéger tels qu'un fusible simple, un fusible thermique ou encore un disjoncteur en série dans le circuit de mesure. Le seuil d'autoprotection est déterminé par construction en fonction de caractéristiques du circuit de mesure et/ou de la valeur maximale de puissance pouvant être mesurée. Il est en outre avantageux d'inhiber toute nouvelle mise sous tension du groupe fonctionnel pendant un temps déterminé permettant un refroidissement des composants du circuit de mesure après une déconnexion automatique. La période d'inhibition consécutive à une déconnexion automatique à des fins d'autoprotection sera avantageusement signalée à l'utilisateur par un changement d'état visible du dispositif tel que par exemple par l'allumage d'un voyant lumineux spécifique, un changement de couleur et/ou un clignotement spécifique d'un voyant non spécifique.
Il existe un problème fréquent dans les familles qui est le temps excessif que les enfants ou les adolescents consacrent à la télévision et/ou à l'ordinateur. Le dispositif selon l'invention résout ce problème dans une variante de mise oeuvre dans laquelle il comprend une horloge. Cette horloge comprend des moyens d'alimentation autonomes, par exemple une pile au lithium, et peut intégrer avantageusement une gestion des jours de la semaine. Cette horloge comprend en outre des moyens de programmation permettant de définir des plages temporelles associées à des périodes où la mise en marche dudit groupe fonctionnel d'appareils est possible et d'autres plages temporelles où sa mise en marche est impossible. Lorsqu'il existe une gestion des jours de la semaine, les plages temporelles peuvent être différenciées en fonction des jours pour tenir compte de particularités calendaires comme par exemple les jours où les enfants n'ont pas d'école le lendemain, les jours où ils n'ont pas d'école et le week-end.

Dans certaines variantes de mise en oeuvre, le dispositif selon l'invention comprend des moyens de verrouillage physique d'au moins la prise de l'appareil principal ainsi que des moyens de verrouillage physiques ou logiques des moyens permettant la mise en marche des appareils raccordés. Ces moyens permettent à une autorité par exemple aux parents ou à un détenteur de droits d'empêcher la mise en marche d'au moins ledit appareil principal du groupe fonctionnel d'appareils. Le verrouillage physique d'au moins la prise de l'appareil principal, par exemple le téléviseur ou l'unité centrale de l'ordinateur est nécessaire pour éviter qu'un utilisateur souhaitant détourner l'interdit ne débranche cet appareil du dispositif selon l'invention pour le rebrancher sur une prise normale. Les moyens de verrouillage empêchent en outre l'utilisateur d'accéder aux moyens de commande ou inhibent l'effet de tout moyen de commande susceptible de mettre en marche le groupe fonctionnel d'appareils. Les moyens de verrouillage selon l'invention sont avantageusement associés à la variante intégrant un programmateur de périodes interdites pour en garantir le respect. Les moyens de verrouillage peuvent être de toute nature comme par exemple ceux de la liste non limitative suivante : clé mécanique, système mécanique à combinaison de symboles, lecteur de cartes, de jetons, de caractéristiques biométriques, clavier ou tout autre moyen de saisie de code, tout moyens de paiement directs ou indirects.

De plus en plus de ressources informatiques, connectées à des réseaux filaires ou à des réseaux sans fils tels que WIFI, sont éloignées de l'unité centrale qui les utilise. Il devient difficile de gérer directement l'alimentation électrique de ces appareils distants par la connexion de leur cordon d'alimentation sur le dispositif coupe-veille raccordé à l'unité centrale. Les unités centrales peuvent en outre être multiples au sein d'un même réseau et se partager une pluralité de périphériques. Une variante du dispositif selon l'invention résout ce problème en intégrant des moyens pour asservir à distance une ou plusieurs extensions associées au sein d'un réseau.

L'association entre les dispositifs coupe-veilles selon l'invention, qui intègrent des moyens de mesure, de prise de décision, de commutation et d'émission d'information, et les extensions intégrant des moyens de réception et de commutation, peut se faire par tous moyens permettant d'affecter un code commun à tous les dispositifs émetteurs et récepteurs appartenant à un même réseau. Les émissions d'information se feront avantageusement à une fréquence variable dans certaines limites par exemple de manière aléatoire pour diminuer les risques de collisions.

Les extensions associées sont agencées pour mettre sous tension les appareils qui y sont raccordés, tant qu'au moins un dispositif au sein du même réseau est lui-même dans l'état où ledit groupe fonctionnel qui y est directement raccordé est sous tension, et pour mettre hors tension les appareils qui y sont raccordés lorsque tous les dispositifs au sein du même réseau sont dans l'état où les groupes fonctionnels qui y sont directement raccordés sont hors tension. On ne sort pas du cadre de l'invention si pour des raisons d'économies d'échelle ou de simplification, on rassemble les fonctions de dispositif coupe-veille et d'extension dans un même dispositif unique pouvant être configuré pour jouer l'un ou l'autre rôle selon les besoins.

Le but principal du dispositif selon l'invention est de faire des économies en supprimant les consommations inutiles des appareils en veille. Ce dispositif s'adresse à des utilisateurs qui sont généralement sensibles aux problématiques d'efficacité énergétique et qui ont ponctuellement besoin de connaître les caractéristiques de consommation d'un ou de plusieurs appareils. Compte tenu du faible surcoût qu'engendre l'ajout de la fonction de mesure ou d'évaluation de la consommation sur un dispositif coupe-veille selon l'invention, il est avantageux de la proposer dans certaines variantes de réalisation. Cette fonction peut d'ailleurs être proposée de manière conjointe à des fonctions d'évaluation des économies réalisées et/ou à des fonctions de programmation horaire en ce qu'elles utilisent des ressources techniques communes comme par exemple un microcontrôleur, des moyens de mesure, des moyens d'affichage et des moyens de réglage.

La consommation énergétique du ou des appareils raccordés au dispositif selon l'invention pourra être calculée à partir de la puissance mesurée en prenant en compte le courant dans la charge et la tension à ses bornes. Selon la précision recherchée, les moyens de mesure feront ou non l'objet d'un étalonnage en usine.
Il est également possible, sans sortir du cadre de l'invention, d'évaluer la consommation d'énergie à partir de la seule mesure indispensable à la fonction coupe-veille selon l'invention qui est la mesure du courant traversant la charge externe. L'évaluation de la consommation d'énergie repose sur une évaluation de la puissance absorbée par la charge c'est à dire sur la multiplication de la valeur du courant mesuré par une constante représentative de la tension nominale du réseau électrique, par exemple 230V en Europe et 110V en Amérique du nord. La précision obtenue par évaluation de la puissance est a priori moins élevée que par une mesure comprenant une mesure du courant circulant dans la charge et une mesure de la tension à ses bornes mais elle peut être suffisante pour répondre aux besoins d'information du grand public à moindre coût.

La constante représentative de la tension nominale du réseau électrique peut être déterminée à la conception du dispositif et faire partie des moyens de calcul à l'identique pour chaque appareil. Une meilleure précision pourra être obtenue par l'ajout d'une procédure d'étalonnage en usine faisant avantageusement partie du test final unitaire des appareils. La procédure d'étalonnage peut par exemple comprendre les étapes suivantes :
- alimentation du dispositif à la tension nominale du réseau électrique par exemple 230V en Europe ou 110V en Amérique du nord,
- connexion d'une charge externe dont la puissance est connue,
- extraction de la valeur mesurée par le dispositif qui est basée sur une première valeur connue d'un coefficient interne,
- calcul par des moyens externes au dispositif d'un coefficient supplémentaire de correction à appliquer ou d'une nouvelle valeur corrigée du premier coefficient mis en oeuvre par les moyens de calculs embarqués dans le dispositif pour que la valeur mesurée corresponde à la puissance connue de la charge,
- mémorisation du coefficient supplémentaire de correction ou de la valeur corrigée du premier coefficient dans le dispositif.

Le même type de procédure d'étalonnage peut être mis en oeuvre dans le cas d'une mesure de puissance prenant en compte la tension aux bornes de la charge externe.

Des moyens permettant de présenter l'information de mesure ou d'évaluation de la consommation d'énergie à l'utilisateur seront mis en oeuvre dans le dispositif selon l'invention sous la forme, par exemple de moyens d'affichage embarqués. L'information pourra être donnée en unité de mesure physique, par exemple en wattheure ou en kilowattheure et/ou en unité monétaire et/ou par retour d'une information sensorielle en relation avec la quantité d'énergie ne faisant référence à aucune unité. L'affichage en unité monétaire suppose une phase préalable de sélection des règles de correspondance tarifaire préprogrammées dans le dispositif ou la saisie par l'utilisateur des données tarifaires par des moyens appropriés. La prise en compte de tarifications différenciées selon des plages horaires prédéfinies peut avantageusement être offerte si une horloge est mise en oeuvre dans le dispositif.

La présentation de l'information par retour d'une information sensorielle en relation avec la quantité d'énergie ne faisant référence à aucune unité peut par exemple être une surface lumineuse variable comme par exemple un bar graph ou encore une source d'intensité lumineuse variable ou encore la production d'un son dont la fréquence ou l'intensité est variable L'information de puissance moyenne absorbée par la charge externe pourra en outre être présentée à l'utilisateur sans sortir du cadre de l'invention.

Le but principal du dispositif selon l'invention est de faire des économies en supprimant les consommations inutiles des appareils en veille. Dans certaines variantes de mise en oeuvre le dispositif peut comprendre des moyens pour évaluer les économies réalisées par exemple en comptabilisant le temps pendant lequel le dispositif supprime l'alimentation des appareils externes et en calculant l'énergie que cela représente à partir de la puissance consommée par ces appareils lorsqu'ils sont en veille. La valeur de la puissance en veille des appareils dudit groupe fonctionnel que le dispositif selon l'invention doit connaître peut être saisie par l'utilisateur au moyen d'une interface homme-machine appropriée, la puissance peut aussi être mesurée par des moyens intégrés au dispositif ou encore la puissance peut être évaluée à partir de la mesure de courant circulant dans la charge. En pratique une estimation de la puissance consommée en veille sera suffisante pour donner un ordre de grandeur des économies réalisées.

Une simple estimation de la puissance consommée en veille est avantageuse en ce qu'elle peut être fournie par les moyens déjà mis en oeuvre dans le dispositif selon l'invention pour assurer son fonctionnement de base et peut de surcroît ne pas nécessiter d'étalonnage pour le niveau de précision souhaité.

Le calcul des économies réalisées par la suppression des consommations en veille se fera à partir de la valeur d'une mesure ou d'une évaluation de la puissance qui aurait été absorbée par le ou les appareils externes s'ils n'avaient pas été déconnectés par le dispositif selon l'invention.

On pourra par exemple procéder aux calculs pour évaluer la puissance puis l'énergie économisée à partir d'une valeur mesurée ou évaluée qui aura été préalablement mémorisée. La mise en mémoire de la valeur mesurée ou évaluée de la puissance absorbée par la charge, ou encore d'une grandeur qui en est représentative, peut être avantageusement réalisée entre le moment où les conditions conduisant à la mise hors tension du groupe fonctionnel d'appareils ont été réunies et le moment où l'alimentation de ces appareils est coupée. Tout ce qui a été décrit précédemment concernant les moyens pour obtenir une mesure ou une évaluation de la puissance dans la charge externe selon le niveau de précision souhaitée ainsi que sur les moyens pour présenter les informations à l'utilisateur en unité de mesure physique et/ou monétaire et/ou par retour d'une information sensorielle en relation avec la quantité d'énergie ne faisant référence à aucune unité, s'applique aussi aux moyens pour évaluer les économies réalisées.

Selon un autre aspect de l'invention, des moyens de connexion multiples seront mis en oeuvre pour éviter à l'utilisateur de devoir ajouter des prises multiples externe pour connecter la pluralité d'appareils externe composant le groupe fonctionnel. Les moyens de connexion multiples pourront en outre comprendre des connecteurs dédiés à des usages spécifiques et identifiés comme tels. Par exemple dans la variante de l'invention dans laquelle les moyens de mesure embarqués ne mesurent que la puissance consommée par l'appareil principal en ne prenant pas en compte celle des appareils dits secondaires, un connecteur dédié à l'appareil principal et identifié comme tel sera mis en oeuvre, d'autres connecteurs électriquement montés en parallèle pourront avantageusement être proposés pour raccorder les autres appareils du groupe fonctionnel et identifiés comme tels. Un connecteur supplémentaire continûment alimenté et identifié comme tel pourra avantageusement être ajouté au dispositif selon l'invention pour raccorder des équipements devant être alimentés en permanence tels que des enregistreurs vidéo programmables dans un groupe fonctionnel audiovisuel ou un modem fax ou encore un adaptateur ADSL dans un groupe fonctionnel informatique.

En outre, les moyens de connexion multiples mis en oeuvre pourront être de tous types, par exemple en mélangeant des prises normalisées avec terre et de prises normalisées sans terre pour à la fois correspondre aux types de connecteurs équipant les appareils à raccorder et pour rendre le bloc de connecteurs plus compact et/ou moins coûteux.

Le dispositif technique selon l'invention pourra avantageusement être associé à un autre dispositif offrant des fonctions complémentaires. Ces fonctions annexes peuvent être par exemple des fonctions esthétiques. Par exemple par sur-habillage du dispositif technique selon l'invention. Il est ainsi possible de découpler la fonction d'habillage esthétique et la fonction d'habillage technique. Les moyens d'habillage technique prennent en compte les contraintes de sécurité telles que la non-propagation des flammes dans les matériaux utilisés et l'isolation électrique. Le sur-habillage esthétique du dispositif technique peut être réalisé avec tout type de matériaux y compris ceux qui seraient proscrits pour l'habillage direct de dispositif électronique au potentiel du réseau électrique et pouvant s'échauffer. On peut ainsi utiliser des mousses en matière plastique, des matériaux précieux, du bois, des métaux, de la céramique ou du verre etc.

Le sur-habillage esthétique peut en outre permettre de conjuguer les avantages d'un appareil technique fabriqué en grande série avec l'intérêt de son inclusion dans des objets esthétiques différenciés pouvant être fabriqués à plus petite échelle voir de fabrication artisanale. Il peut également être intéressant de proposer le dispositif selon l'invention sous la forme d'un appareil électrique à encastrer ou à fixer en saillie en tant que qu'appareil faisant partie de l'installation électrique du bâtiment. Des moyens rendant difficiles la dépose du dispositif seront avantageusement mis en oeuvre pour répondre au besoin d'une réduction des risques de vol pour les installations dans des lieux publics ou collectifs.

L'intégration de l'invention dans un autre dispositif peut également être réalisée pour des raisons fonctionnelles. Ces fonctions annexes peuvent être destinées à changer l'aspect esthétique du dispositif, pour servir de support de communication comme par exemple à des fins promotionnelle, publicitaire, informative, personnalisable par l'utilisateur. Lesdites fonctions annexes peuvent également être une ou plusieurs fonctions supplémentaires en rapport avec la fonction principale de l'invention comme dans les exemples non limitatifs suivants : luminaire, économètre, alimentation secourue, dispositif de protection contre les surtensions du réseau électrique et les effets de la foudre intégrant éventuellement des connexions à d'autres réseaux filaires tels que ligne télécom, réseau informatiques, distribution d'antenne...

Le cas de la fonction luminaire est particulièrement pertinent en ce qu'il répond à un besoin en termes d'ergonomie. Au sein d'un groupe fonctionnel audiovisuel la fonction luminaire est utile comme éclairage d'ambiance adapté pour regarder la télévision. Dans un groupe fonctionnel informatique la fonction luminaire pourra avantageusement prendre la forme d'une lampe de bureau. Quel que soit le type de luminaire associé à l'invention il sera avantageusement raccordé électriquement de manière à ce que la fonction d'éclairage soit automatiquement mise en marche lorsque l'appareil principal est en marche et qu'elle soit automatiquement mise à l'arrêt lorsque le groupe fonctionnel est mis hors tension. Un interrupteur pourra avantageusement être ajouté en série avec l'alimentation de la source éclairage pour offrir à l'utilisateur la possibilité de maintenir l'éclairage éteint inconditionnellement.

Le dispositif selon l'invention peut également être intégré dans, ou intégrer en son sein, d'autres dispositifs offrant des fonctions supplémentaires sans rapport avec la fonction principale de l'invention comme dans les exemples non limitatifs suivants : horloge, calendrier, thermomètre d'ambiance et/ou extérieur, matériel de bureau, gadgets divers.

Dans certaines variantes de mise en oeuvre, une commande manuelle d'arrêt de l'alimentation du groupe fonctionnel est offerte à l'utilisateur s'il souhaite anticiper l'arrêt automatique. La commande d'arrêt manuelle peut s'avérer utile lorsque la temporisation entre la détection de la condition d'arrêt et l'arrêt automatique effectif est de longue durée. Cette commande d'arrêt manuel peut utiliser un moyen dédié tel qu'un bouton poussoir spécifique ou partager un bouton avec une autre fonction par exemple un bouton poussoir commun pour la mise en marche et à l'arrêt. Selon les choix de mise en oeuvre, la commande manuelle d'arrêt peut être inconditionnelle ou n'être opérante que pendant la temporisation d'arrêt automatique c'est-à-dire uniquement lorsque l'appareil principal est préalablement arrêté ou en veille. Dans le cas d'une commande d'arrêt manuel inconditionnel, il est particulièrement avantageux de mettre en oeuvre des solutions pour diminuer le risque d'arrêt manuel involontaire, notamment d'un ordinateur. Ceci peut se faire par conception en rendant peu accessible le bouton d'arrêt si ce bouton est spécifique et/ou par la mise en oeuvre d'une procédure de mise à l'arrêt nécessitant par exemple un appui d'une durée déterminée relativement longue, par un nombre d'appuis déterminé, par une séquence combinant un nombre d'appuis et des durées d'appui et/ou de relâchement du bouton déterminés ...

Des variantes de mise en oeuvre de l'invention peuvent reposer sur une approche modulaire permettant d'ajouter des fonctionnalités complémentaires, par connexion mécanique et électrique de modules associés à une fonction ou à un groupe de fonctions additionnelles, au bloc fonctionnel de base destiné aux économies d'énergie. On ne sort pas du cadre de l'invention si le dispositif est intégré dans un autre appareil pouvant faire partie d'un groupe fonctionnel au sens de l'invention voir être un appareil dit principal tel qu'un ordinateur, un téléviseur, un coeur de système Hifi. Plus généralement le dispositif selon l'invention peut être intégré dans tout autre appareil susceptible d'économiser de l'énergie en le mettant en oeuvre.

L'une des caractéristiques principales de l'invention est le fait qu'elle vise l'universalité c'est à dire qu'a priori son électronique peut fonctionner avec tout type de groupe fonctionnel, par exemple aussi bien avec un téléviseur et ses équipements audiovisuels associés qu'avec un ordinateur et ses périphériques. Cela étant, on ne sort pas du cadre de l'invention si pour des raisons marketing, de stratégie commerciale, d'optimisation des coûts ou d'ajout de fonctions complémentaires spécifiques à un type d'usage on maintient une spécialisation du coupe-veille pour un type de groupe fonctionnel donné. Le caractère universel est à comprendre comme étant associé au fait que le dispositif selon l'invention, contrairement aux dispositifs à l'état de l'art, fonctionne avec la plupart des appareils de chaque catégorie, notamment avec la plupart de modèles de téléviseurs et la plupart des modèles d'ordinateurs.

### Description sommaire des dessins

D'autres particularités et avantages de l'invention apparaîtront encore dans la description ci-après. Aux dessins annexés données à titre d'exemples non limitatifs :
- La figure 1 illustre le circuit de puissance du dispositif selon l'invention dans le cas où l'ensemble des charges constituant le groupe fonctionnel d'appareils sont raccordées en parallèle y compris l'appareil dit principal au sein de ce groupe fonctionnel.
- La figure 2 illustre le circuit de puissance du dispositif selon l'invention dans un cas de mise en oeuvre qui se distingue du précédent en ce qu'un connecteur spécifique est destiné à l'appareil dit principal du groupe fonctionnel.
- La figure 3 illustre le mode de réalisation du dispositif selon l'invention dans sa variante dite multiprise.
- La figure 4 illustre le mode de réalisation du dispositif selon l'invention dans sa variante dite compacte.
- La figure 5 illustre le mode de réalisation de l'électronique du dispositif selon l'invention dans sa variante dite analogique.
- La figure 6 illustre le mode de réalisation de l'électronique du dispositif selon l'invention dans sa variante dite numérique.
- La figure 7 illustre une variante du dispositif mettant en oeuvre des moyens de verrouillage des connecteurs des appareils externes raccordés ainsi que des moyens de programmation de périodes temporelles où la mise en marche est autorisée et d'autres où elle est interdite.
- La figure 8 illustre le dispositif selon l'invention dans la variante de la figure précédente avec les moyens de blocage de l'accès aux connecteurs femelles.
- La figure 9 illustre le dispositif selon l'invention dans sa variante dite multiprise, incluant les connecteurs et intégrant en outre des moyens d'affichage et de réglage ainsi que les moyens internes permettant d'offrir des fonctions évoluées.
- La figure 10 illustre le dispositif selon l'invention dans sa variante dite compacte.
- La figure 11 illustre le dispositif selon l'invention associé à une fonction d'éclairage adaptée au cas de la gestion d'un groupe fonctionnel d'appareils audiovisuels.
- La figure 12 illustre le dispositif selon l'invention associé à une fonction d'éclairage adaptée au cas de la gestion d'un groupe fonctionnel d'appareils informatiques.
- La figure 13 illustre le dispositif selon l'invention associé à une fonction esthétique par sur-habillage du dispositif technique selon l'invention dans une forme quelconque.
- La figure 14 illustre le dispositif selon l'invention associé à une fonction esthétique qui en change l'aspect par exemple pour le rendre plus ludique.
- La figure 15 illustre le dispositif selon l'invention dans la variante de mise en oeuvre intégrant des moyens pour asservir des extensions annexes distantes associées.

### Manières de réaliser l'invention

Il existe plusieurs manières de réaliser l'invention notamment en mettant en oeuvre tout ou partie, seules ou en combinaison les variantes décrites ci-après.

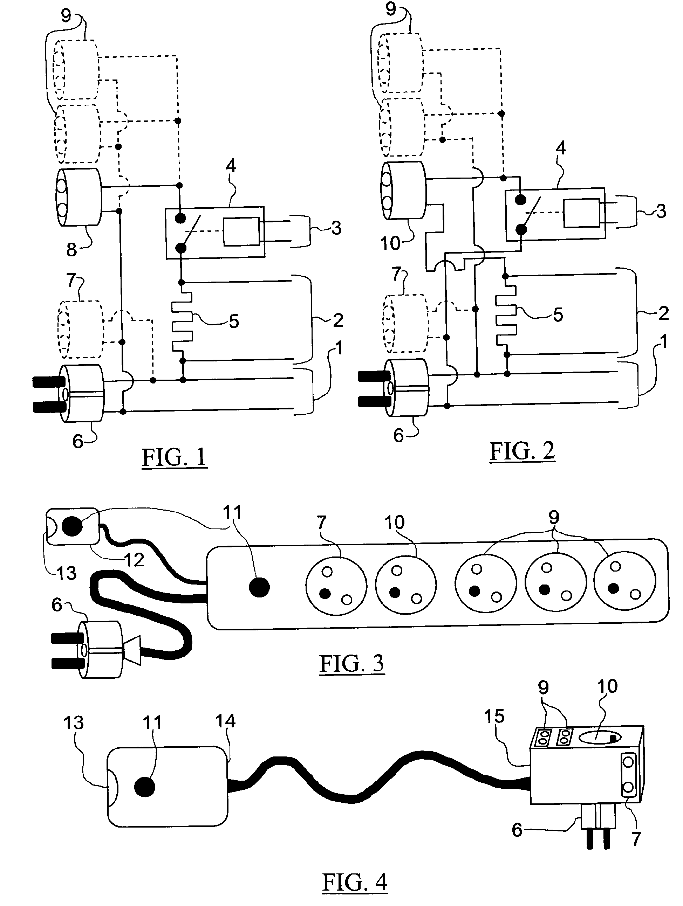

- La figure 1 illustre le circuit de puissance du dispositif selon l'invention dans le cas où l'ensemble des charges constituant le groupe fonctionnel d'appareils sont raccordées en parallèle y compris l'appareil dit principal au sein de ce groupe fonctionnel. L'avantage principal de ce mode de réalisation est que le bloc de connecteurs peut être raccordé à l'électronique selon l'invention par un câble contenant seulement trois conducteurs. Un avantage supplémentaire est la possibilité de réduire le bloc de connecteurs à une prise mâle 6 et une prise femelle 8 en utilisant si nécessaire des prises multiples externes pour raccorder une pluralité d'appareils et/ou un appareil devant être raccordé au réseau électrique en permanence. En outre, tous les connecteurs femelles 9 sont équivalents, mis à part l'éventuel connecteur 7 offrant une alimentation permanente, ce qui réduit les risques d'erreur chez les utilisateurs. L'inconvénient de ce mode de réalisation est une moins grande latitude dans le choix des puissances des appareils mis en oeuvre tant pour l'appareil dit principal que pour les autres appareils du groupe fonctionnel. En pratique il sera néanmoins possible de trouver des compromis donnant toute satisfaction avec la plupart des appareils. C'est un mode de réalisation qui convient bien à une mise en oeuvre dite compacte telle que présentée figure 4 en ce qu'elle minimise l'encombrement et le coût du câble reliant le bloc de connecteurs à l'électronique du dispositif. Bien entendu on ne sort pas du cadre de l'invention si on fait porter la mesure sur l'ensemble du groupe fonctionnel d'appareils dans un autre mode de réalisation que celui illustré par la figure 4.
   L'extension des fils 1 est destinée à l'alimentation interne du dispositif, l'extension des fils 2 est destinée aux moyens de mesure, l'extension des fils 3 est destinée à la commande du relais, les composants 4 et 5 représentent respectivement, le relais de commutation, et la résistance shunt de mesure du courant circulant dans les charges externes raccordées.
- La figure 2 illustre le circuit de puissance du dispositif selon l'invention dans un cas de mise en oeuvre qui se distingue du précédent en ce qu'un connecteur spécifique 10 est destiné à l'appareil dit principal du groupe fonctionnel. L'intérêt de cette variante préférée de mise en oeuvre est une plus grande maîtrise des caractéristiques de fonctionnement du dispositif en particulier par un découplage total des caractéristiques dudit appareil principal de celles des autres appareils du groupe fonctionnel. L'ensemble des appareils du groupe fonctionnel sont déconnectés mais la mesure conduisant aux prises de décision selon l'invention ne porte que sur la consommation dudit appareil principal. L'inconvénient de ce mode de réalisation est que le bloc de connecteurs est raccordé à l'électronique selon l'invention par un câble contenant quatre conducteurs. C'est le mode de réalisation qui convient le mieux à une mise en oeuvre dite multiprise telle que présentée figure 3 en ce que le câblage interne d'un conducteur supplémentaire représente un surcoût négligeable. Bien entendu on ne sort pas du cadre de l'invention si on met en oeuvre un circuit de mesure dédié exclusivement à l'appareil principal dans un autre mode de réalisation que celui illustré par la figure 3. Ce mode de réalisation est celui qu'il faut préférer lorsque la qualité prime sur le coût. Les références communes avec la figure 1 concernant les composants et les extensions de fils ont la même signification.
- La figure 3 illustre le mode de réalisation du dispositif selon l'invention dans sa variante dite multiprise qui est raccordée au réseau électrique par un câble terminé par une prise mâle 6. L'électronique du dispositif est placée dans le même boîtier monobloc que la connectique. Outre la connectique destinée au groupe fonctionnel 9,10 il peut être ajouté un connecteur alimenté en permanence 7 et dans le cas d'un câblage interne tel qu'illustré par la figure 2, un connecteur spécifique 10 pour l'appareil dit principal. Le cas échéant, la commande de mise en marche 11 pourra être déportée ou dupliquée 12 sans sortir du cadre de l'invention. Un moyen de commande de mise en marche déporté améliorera notablement la facilité d'usage et l'esthétique du dispositif selon l'invention en ce que seul le moyen de commande déporté sera visible et positionné en un endroit facile d'accès. Le bloc principal pouvant avantageusement rester au sol et si possible caché. On entend par moyen de commande déporté tout moyen permettant à l'utilisateur de mettre en marche le groupe fonctionnel d'appareils sans qu'il soit nécessaire d'agir physiquement sur la partie principale du dispositif selon l'invention. Ce peut être un simple bouton poussoir déporté 11 relié par un câble à la partie principale du dispositif selon l'invention qui pourra en outre intégrer un récepteur de signaux de télécommandes infrarouges 13. Le moyen de commande déporté 12 peut aussi être avantageusement relié au dispositif par une liaison sans fil, par exemple par radio avec des moyens de codage pour rendre exclusive l'association avec le dispositif selon l'invention auquel il est destiné. nécessaire pour associer un bouton de commande déporté à un dispositif selon l'invention unique. On peut aussi déporter virtuellement le bouton de commande de mise en marche en ajoutant des moyens de réception de signaux de télécommande infrarouge, des moyens pour capter et reconnaître des signaux acoustiques caractéristiques tels qu'un sifflement ou des claquements de mains, des moyens de reconnaissance vocale, même simplifiés, sans sortir du cadre de l'invention.

- La figure 4 illustre le mode de réalisation du dispositif selon l'invention dans sa variante dite compacte. L'électronique du dispositif est séparée du bloc de connecteurs qui, dans sa version minimale, peut être une prise gigogne male / femelle au bout d'un câble unique ou encore deux câbles séparés, l'un équipé d'une prise mâle pour le raccordement au réseau électrique et l'autre câble terminé par une prise femelle destiné au groupe fonctionnel d'appareils pouvant le cas échéant se réduire audit appareil principal. L'électronique du dispositif selon l'invention sera logée dans un boîtier 14 qui sera placé en un endroit facile d'accès. Si le dispositif électronique intègre des moyens 13 pour recevoir des signaux de télécommande infrarouge et qu'il est utilisé avec des appareils audiovisuels, alors il devra être placé de manière à recevoir ces signaux, par exemple sur le téléviseur. Le bloc de connecteur pourra comprendre une prise mâle 6 et une pluralité de prises femelles, avec 10 ou sans terre 9 selon les usages concernés, et avec ou sans un ou plusieurs connecteurs 7 raccordés en parallèle sur l'arrivée du secteur 6 pour alimenter les appareils devant l'être de manière inconditionnelle. Selon que la mesure porte sur la consommation globale dudit groupe fonctionnel ou seulement sur celle dudit appareil principal, le câble reliant le boîtier principal 14 et le bloc de prises 15 contiendra respectivement 3 ou 4 conducteurs.

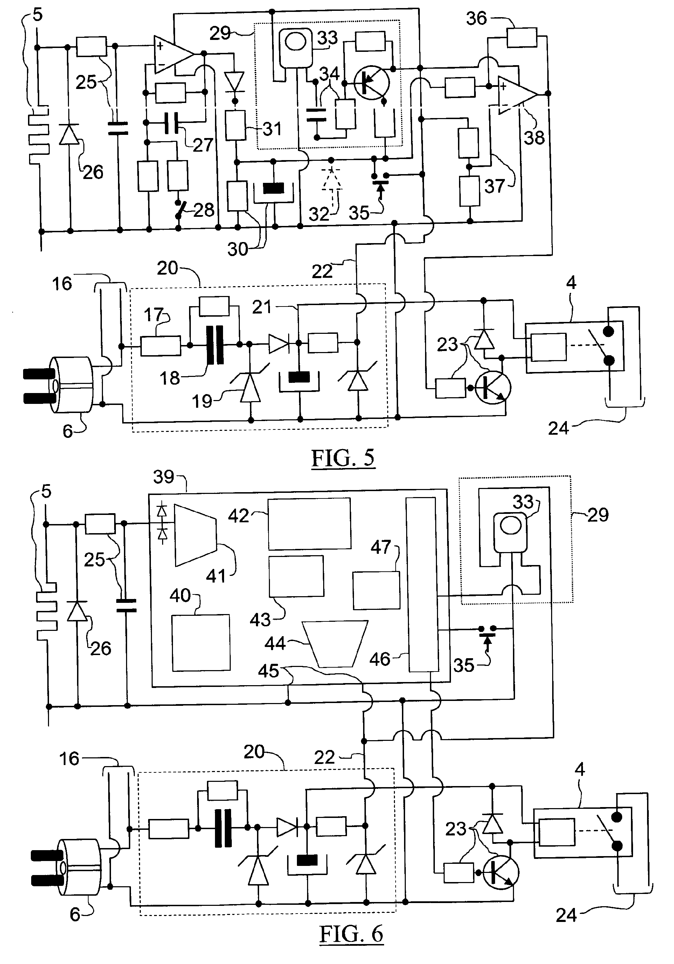

- La figure 5 illustre le mode de réalisation de l'invention dans sa variante dite analogique. Un signal représentatif du courant donc de la puissance circulant dans la ou les charges concernées est extrait aux bornes de la résistance shunt 5. Cette résistance pouvant être insérée dans un circuit de puissance comme par exemple celui illustré par la figure 1 ou celui illustré par la figure 2. Cette résistance aura avantageusement une valeur ohmique la plus faible possible, par exemple de 0,10 à 0,47 Ohms pour pouvoir dissiper peu de chaleur avec des puissances de charge pouvant dépasser 500W tout en restant dans des modèles de résistance relativement peu encombrants et peu coûteux, par exemple des modèles ayant une puissance nominale allant de 3 à 7 watts. Le signal alternatif symétrique prélevé aux bornes de la résistance shunt se voit avantageusement amputé de la demi-alternance non-utilisée par l'électronique asymétrique qui suit par une diode 26 orientée de manière appropriée. Le signal est avantageusement présenté à un premier réseau RC 25 assurant le double rôle de filtre passe bas et d'intégrateur. Ce réseau contribue à l'atténuation des pics instantanés de courant que produisent certaines alimentations à découpage de certains appareils externes raccordés au dispositif. Le signal filtré est ensuite amplifié de manière sélectivement plus importante pour ses composantes à basses fréquences, typiquement celles qui sont inférieures ou égales à la fréquence du réseau électrique. Ceci se fait au moyen d'au moins un condensateur 27 dans le circuit de contre-réaction d'un ou plusieurs amplificateurs opérationnels éventuellement en montés en cascade pour obtenir le gain total nécessaire au bon fonctionnement du dispositif selon l'invention. Un réglage de sensibilité 28 à au moins deux positions pourra avantageusement être ajouté dans la chaîne d'amplification pour pouvoir couvrir toute l'étendu des besoins correspondant à toutes les tailles de téléviseurs et également aux caractéristiques des ordinateurs depuis les modèles portables jusqu'aux plus grosses configurations. Le signal est ensuite appliqué à un réseau RC 30 par l'intermédiaire d'une diode et d'une résistance 31 pour fournir une tension constante représentative de la puissance moyenne consommée par la charge. La résistance de charge 31, montée en série, et la résistance de décharge montée en parallèle sur le condensateur seront dimensionnées pour obtenir un compromis, pour être peu sensible aux phénomènes transitoires tels que les surintensités à la mise sous tension, pour obtenir des temps de réaction appropriés dans toutes les phases du fonctionnement du dispositif, pour que la sensibilité corresponde aux puissances des appareils externes à raccorder. La tension continue représentative de la puissance moyenne consommée par la ou les charges raccordées est présentée à un comparateur 38 en charge de la prise décision de maintient en marche ou d'arrêt par comparaison avec un seuil prédéterminé, par exemple sous la forme d'une tension de référence 37 appliquée à l'entrée inverseuse du comparateur. Un hystérésis sera avantageusement ajouté, par exemple en plaçant une résistance 36 de réaction positive entre la sortie du comparateur et son entrée non-inverseuse pour éliminer le risque d'instabilité. La sortie du comparateur commande l'état du relais de puissance par l'intermédiaire d'une interface appropriée 23 par exemple constituée d'un transistor NPN, de sa résistance de base et d'une diode de protection. Le principe de fonctionnement est le suivant : au repos les contacts du relais sont ouverts et le groupe fonctionnel d'appareils est déconnecté du réseau électrique. L'utilisateur souhaitant utiliser le matériel raccordé au dispositif selon l'invention, commande sa mise sous tension par des moyens directs ou indirects. Il peut s'agir par exemple selon les moyens mis en oeuvre dans le dispositif d'un appui sur un bouton poussoir local ou déporté, de l'émission d'un signal au moyen d'une télécommande radio ou infrarouge spécifique à l'invention ou partagée avec un autre appareil, de l'émission d'un signal acoustique caractéristique ou tout autre moyen ayant pour effet d'appliquer, pendant un temps prédéterminé, une tension supérieure au seuil de prise de décision de maintien de l'état marche du dispositif. Cette action fugitive engendre la fermeture des contacts du relais et par voie de conséquence provoque l'alimentation dudit groupe d'appareils externes pendant un temps déterminé en relation avec le réseau RC 30. Pendant ce laps de temps, l'utilisateur doit confirmer la mise en marche des appareils le cas échéant en faisant passer ledit appareil principal de l'état de veille à l'état marche par les moyens prévus à cet effet pour cet appareil. A défaut de confirmation de l'état de mise en marche constaté par le dispositif selon l'invention dans les temps prévus par le passage de la puissance consommé au dessus du seuil de prise de décision d'arrêt, les contacts du relais s'ouvrent et les appareils du groupe fonctionnel sont déconnectés du réseau électrique. A tout moment, même après avoir constaté les conditions d'un maintien en marche, le dispositif selon l'invention coupe l'alimentation de l'ensemble des appareils du groupe fonctionnel si la puissance consommée par l'appareil principal passe sous le seuil de prise de décision d'arrêt. Ceci est possible indifféremment par une mise à l'arrêt complet dudit appareil principal ou par sa mise en veille par les moyens appropriés le cas échéant. Le sous ensemble optionnel 29 est agencé pour recevoir les signaux émis par les télécommandes habituellement fournies avec les appareils audiovisuels. Un détecteur intégré standard 33, par exemple un modèle comprenant un démodulateur pour des signaux ayant une fréquence porteuse de 38 kHz et ayant une sortie active à l'état bas va charger le réseau RC série 30 à partir de trains d'impulsions à la tension d'alimentation du comparateur par l'intermédiaire d'un transistor PNP. La liaison entre la sortie du détecteur 33 et la base du transistor se fait au moyen d'un réseau RC série 34 dont la valeur sera un compromis devant permettre la réduction de l'influence des signaux parasites générés par exemple par les sources lumineuses tout en rendant le dispositif fonctionnel avec si possible la totalité des standards de télécommande du marché. Le transistor PNP assure intrinsèquement la fonction diode permettant au réseau RC 30 de se charger à la tension la plus élevée parmi les sources possibles. Les éventuels autres moyens de mise en marche devront fournir une tension suffisante au réseau RC 30 par l'intermédiaire d'un transistor PNP ou d'une diode 32 orientée anode vers la source de tension et avec, le cas échéant, une résistance montée en série avec la source de tension. Des résistances ayant des valeurs adaptées seront avantageusement ajoutées en série avec les sources de tension de charge du réseau RC 30 pour différencier de manière appropriée les temps de réaction selon les sources. Ainsi l'appui sur le bouton de mise en marche 35 aura un effet immédiat par une valeur de résistance de charge nulle, le récepteur de signaux de télécommande nécessitera un appui pendant par exemple une dizaine de seconde pour éliminer les risques de faux départ et le circuit de mesure offre une constante de temps qui réduit l'influence des phénomènes transitoires. En outre, la valeur de la résistance de charge 31 raccordée à la sortie du circuit de mesure est associée aux seuils de prise de décision en ce qu'elle forme un pont diviseur de tension avec la résistance de décharge du réseau RC 30 avant comparaison. Bien entendu on ne sort pas du cadre de l'invention en ajoutant des étages d'amplification et/ou de filtrage, si on ajoute des composants pour améliorer la stabilité du fonctionnement et l'immunité aux parasites, si on remplace les transistors bipolaire par des transistors MOS ou tout autre dispositif ayant des fonctions équivalentes, si on travaille sur les deux alternances du signal mesuré, si on alimente l'électronique avec des tensions symétriques, si l'hystérésis du comparateur se fait en modifiant la tension de seuil en fonction de l'état de la sortie au lieu de modifier la tension d'entrée.
   L'alimentation basse tension 20 du dispositif utilisera avantageusement un ou plusieurs condensateurs 18 en tant que moyen permettant de faire chuter la tension du réseau électrique. Outre les avantages de coûts et de compacité par rapport à la solution classique du transformateur abaisseur de tension pour les faibles puissances, le déphasage introduit par le condensateur annule presque toute consommation active du dispositif ce qui rend son fonctionnement gratuit pour l'utilisateur car les compteurs électriques ne prennent pas en compte l'énergie réactive. Cette caractéristique peut également être considérée comme un avantage pour le fournisseur d'énergie électrique en ce que les condensateurs connectés au réseau contribuent à la compensation des pertes dues aux charges inductives qui sont majoritaires. L'alimentation à condensateur intègrera une résistance 17 montée en série avec le condensateur pour limiter les pointes de courant à des valeurs supportables par les semi-conducteurs assurant les fonctions de régulation de tension pendant la demi-alternance utile et la circulation du courant pendant la demi-alternance non-exploitée comme le fait par exemple la diode Zener 19. De telles pointes de courant peuvent apparaître lors des transitoires et en la présence de signaux parasites de forte énergie et à dV/dt élevé sur le réseau électrique. Une résistance de décharge sera avantageusement ajoutée en parallèle sur le condensateur 18 pour éliminer le risque de décharge électrique dans les doigts de l'utilisateur qui toucherait les contacts de la prise d'alimentation immédiatement après avoir débranché le dispositif. Le volume et le coût du condensateur 18 est directement lié à l'intensité du courant à fournir. Pour minimiser ces facteurs on choisira avantageusement d'alimenter le relais de puissance avec une première tension relativement élevée 21, par exemple 24 ou 48 Volts, pour minimiser l'intensité du courant à fournir au relais pour une puissance de bobine donnée. Un second étage de régulation de tension fournira une seconde tension 22 en rapport avec les besoins de l'électronique assurant les fonctionnalités du dispositif. D'autres topologies d'alimentations capacitives peuvent être utilisées sans sortir du cadre de l'invention.
- La figure 6 illustre le mode de réalisation de l'invention dans sa variante dite numérique. C'est la variante de mise en oeuvre la plus préférée en ce que le comportement du dispositif peut être mieux maitrisé que par la mise en oeuvre de solutions analogiques et que des fonctions supplémentaires peuvent être ajoutées à un coût marginal faible ou nul. Dans sa variante dite numérique, la plupart des ressources matérielles sont identiques à celles de la figure 5 en particulier les circuits d'alimentation 6, 16, 20, de commutation 4, 23, 24 et les circuits d'entrée de la mesure 5, 25, 26. Les fonctions de base du dispositif selon l'invention sont réalisées dans cet exemple par un microcontrôleur 39 dont les ressources embarquées sont adaptées au besoin et dans lequel un programme adéquat est mis en oeuvre. On utilisera de préférence un microcontrôleur 39 à faible consommation électrique et à plage étendue de tension d'alimentation 45 qui intègre : un convertisseur analogique-numérique 41 ayant une résolution d'au moins 10 bits avec sa source de tension de référence, un étage d'amplification intégré et dont les entrées sont protégées, la source d'horloge 40 pour gagner sur les coûts et l'encombrement, une unité de calculs arithmétiques et logiques 44, une mémoire vive de travail 43, une mémoire morte ou flash 42 contenant le programme spécifique au dispositif selon l'invention, une ou plusieurs temporisations matérielles 47, des ressources d'entrée/sortie 46 pour le cas échéant interfacer des dispositifs extérieurs de commande 35, 29 ou d'action 23, le cas échéant une mémoire non-volatile par exemple de type eeprom ou encore une mémoire de type flash ou ferom avec ou non capacité d'auto-programmation pour stocker des paramètres de fonctionnement si nécessaire. Le « ATtiny25 » de chez « Atmel » (marques déposées) peut par exemple être utilisé mais d'autres modèles chez ce fabricant et chez ses concurrents peuvent également convenir. La mise en oeuvre d'un microcontrôleur est avantageuse en ce qu'elle réduit le coût de l'ajout de fonctions supplémentaires. Dans le cas de l'ajout de moyens de commande de mise en marche comme par exemple par la réception de signaux infrarouge 29, la connexion directe d'un détecteur standard 33 est possible en ce que les traitements de filtrage des parasite et d'exploitation des signaux utiles peuvent être réalisés par logiciel. De même, dans le cas de l'ajout d'un moyen de commande par signaux acoustiques, l'interface matérielle entre le microphone et le microcontrôleur peut être réduite au minimum, le travail de traitement du signal et de sa reconnaissance étant réalisé par des techniques numériques. En outre, l'ergonomie du dispositif selon l'invention peut être améliorée par l'ajout de voyants lumineux tels que des leds et/ou par l'ajout de boutons pour faciliter le réglage de paramètres de fonctionnement dans des procédures pouvant associer des appuis sur des boutons et des clignotements des voyants.

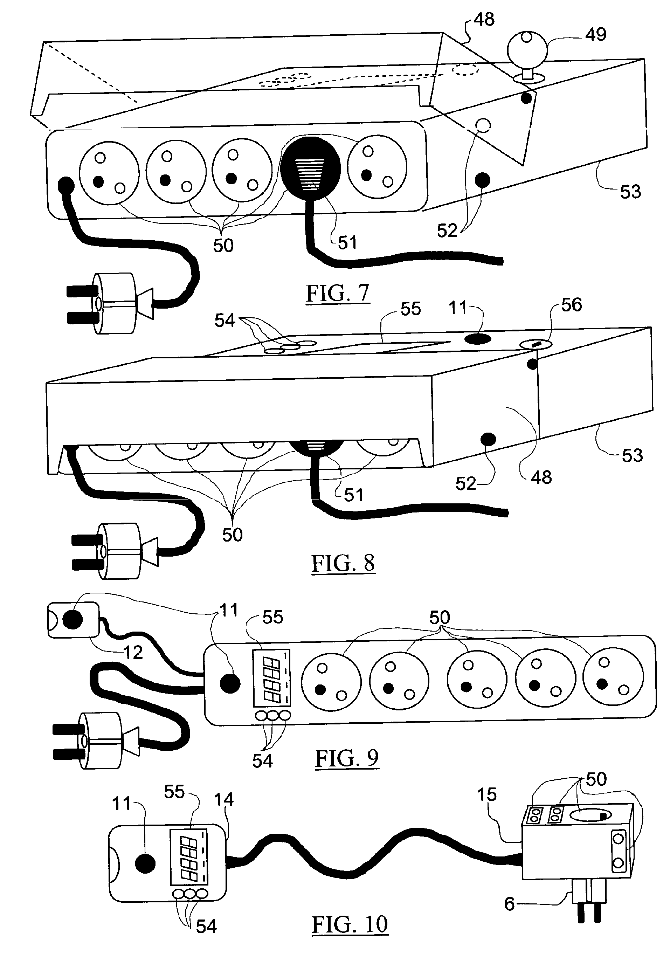

- La figure 7 illustre une variante 53 du dispositif mettant en oeuvre des moyens de verrouillage 49, 52 des connecteurs 50 des appareils externes raccordés ainsi que des moyens de programmation de périodes temporelles où la mise en marche est autorisée et d'autres où elle est interdite. Cette variante est plus particulièrement destinée à l'encadrement de l'utilisation d'appareils audiovisuels et informatique par des adolescents dans un contexte familial ou collectif. Un moyen mécanique 48 pivotant autour d'un axe et déverrouillé, par exemple au moyen d'une clé 49 et de moyens 52, permet l'accès aux connecteurs femelles 50 pour y raccorder librement tout connecteur mâle 51.
- La figure 8 illustre le dispositif selon l'invention dans la variante 53 de la figure précédente avec les moyens de blocage 48, 52, 56 de l'accès aux connecteurs femelle 50 en position verrouillée empêchant tout retrait de connecteur mâle 51. Lorsqu'il est verrouillé, le dispositif est agencé pour empêcher tout réglage susceptible de permettre une mise sous tension des appareils externes, par exemple au moyen de la commande de mise en marche 11, en dehors des périodes temporelles où cela est autorisé. Le réglage de l'horloge et la programmation des périodes où la mise en marche est autorisée ou interdite peut se faire par tous moyens, par exemple à l'aide de boutons 54 et d'un afficheur 55. Bien entendu le dispositif est agencé pour rendre impossible la modification des plages temporelles lorsqu'il est en position verrouillée.
- La figure 9 illustre le dispositif selon l'invention dans sa variante dite multiprise, incluant les connecteurs 50 et intégrant en outre des moyens d'affichage 55 et de réglage 54 ainsi que les moyens internes permettant d'offrir des fonctions évoluées. Ces fonctions peuvent être la mesure ou l'évaluation de la consommation énergétique des charges raccordées et/ou l'évaluation des économies réalisées par la mise en oeuvre de l'invention ou encore tous réglages de paramètres de fonctionnement du dispositif. La ou les commandes de mise en marche 11 peuvent être avantageusement déportées 12.
- La figure 10 illustre le dispositif selon l'invention dans sa variante dite compacte. Le dispositif présentant les mêmes caractéristiques et les mêmes potentialités fonctionnelles que dans le cas de la figure 9. L'électronique, les moyens de commande 11, 54 et d'affichage 55 sont rassemblés dans un boîtier 14 différent de celui 15 qui contient les connecteurs 6, 50.

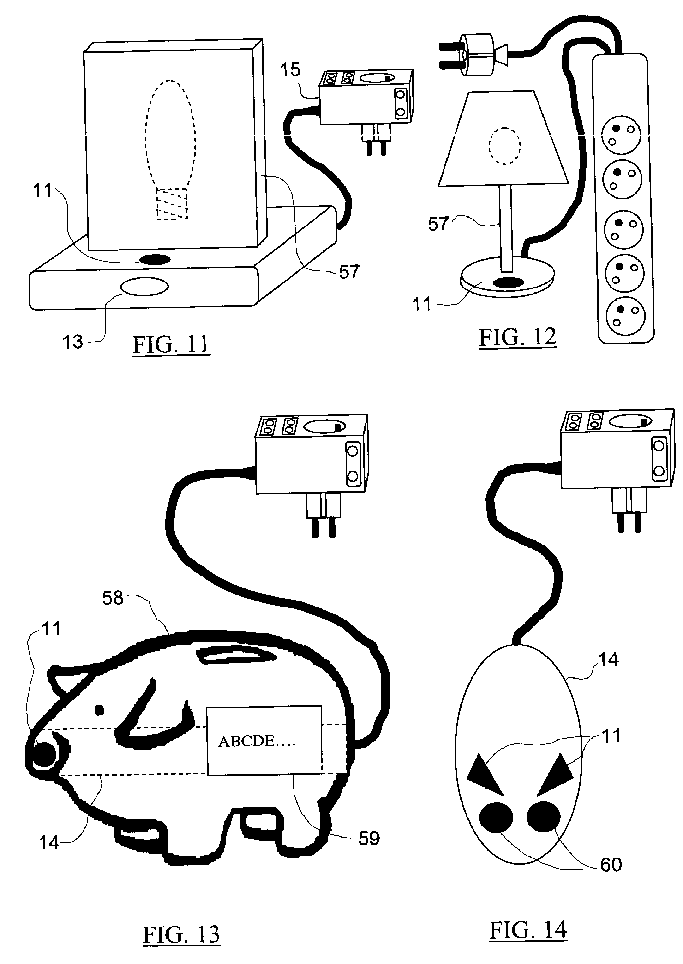

- La figure 11 illustre le dispositif selon l'invention associé à une fonction d'éclairage adaptée au cas de la gestion d'un groupe fonctionnel d'appareils audiovisuels. Dans cet exemple, bien que le coeur du dispositif selon l'invention présente un caractère universel relativement au type d'appareils externes à raccorder, il est associé à une fonction complémentaire dédiée à un usage spécifique. On ne sort pas pour autant du cadre de l'invention. Le luminaire 57 contient l'électronique du dispositif dans son socle et les connecteurs sont déportés sous la forme d'un bloc 15. Le luminaire est agencé de préférence pour offrir un éclairage indirect conformément aux prescriptions des ergonomes et si possible à partir d'une source à basse consommation par soucis de cohérence avec l'objectif de l'invention. Le moyen de commande de mise en marche 11, complété avantageusement par un récepteur de signaux de télécommande 13, sera agencé pour en faciliter l'utilisation. Il est bien entendu possible d'opter pour la variante de mise en oeuvre dite multiprise pour cette association fonctionnelle sans sortir du cadre de l'invention.
- La figure 12 illustre le dispositif selon l'invention associé à une fonction d'éclairage adaptée au cas de la gestion d'un groupe fonctionnel d'appareils informatiques. Le luminaire 57 le mieux adapté dans ce cas est de type lampe de bureau. Le bouton de commande de mise en marche 11 peut avantageusement être intégré dans le socle du luminaire. Un interrupteur monté en série avec l'alimentation de la source d'éclairage ou encore un détecteur de niveau d'éclairement associé à des moyens de commutation appropriés peuvent être ajoutés pour permettre d'économiser respectivement manuellement ou automatiquement l'énergie nécessaire à l'éclairage lorsque ce n'est pas nécessaire. Il est bien entendu possible d'opter pour la variante de mise en oeuvre dite compacte pour cette association fonctionnelle sans sortir du cadre de l'invention.
- La figure 13 illustre le dispositif selon l'invention associé à une fonction esthétique par sur-habillage du dispositif technique selon l'invention 14 dans une forme quelconque 58. La forme esthétique est agencée pour permette l'accès, ou pour transmettre l'action de l'utilisateur, au moyen de commande de mise en marche 11. La forme externe peut intégrer une fonction annexe à l'invention par exemple une fonction tirelire, horloge, thermomètre, range-crayons, support de photo, support de « post-it » (marque déposée) etc. Une fonction de communication 59 peut être ajoutée si nécessaire pour inscrire une marque et/ou un message. Il est bien entendu possible d'opter pour la variante de mise en oeuvre dite multiprise pour cette association fonctionnelle sans sortir du cadre de l'invention. Dans ce cas c'est le moyen de commande déporté, référencé 12 dans les figures, qui est habillé par la forme à finalité esthétique, pour fonction annexe et/ou en tant que support de communication.
- La figure 14 illustre le dispositif selon l'invention associé à une fonction esthétique qui en change l'aspect par exemple pour le rendre plus ludique. Les moyens techniques tels que pour la commande de mise en marche 11 ou pour d'éventuels voyants et/ou capteurs 60 seront avantageusement intégrés dans des éléments caractéristiques de la forme comme par exemple, les oreilles, les yeux dans le cas de la représentation d'un animal.

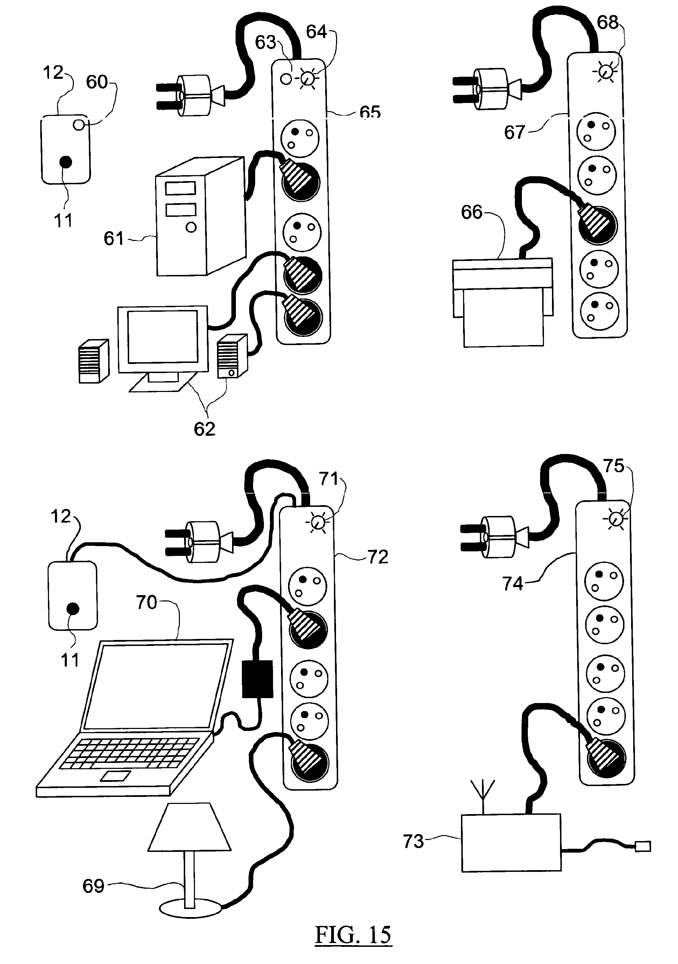

- La figure 15 illustre le dispositif selon l'invention dans la variante de mise en oeuvre intégrant des moyens pour asservir des extensions annexes distantes associées. La figure décrit le cas de deux dispositifs selon l'invention avec deux extensions qui sont utilisées dans le cadre d'un même réseau de partage de ressources informatiques. Ce réseau comprend un premier ordinateur 61 raccordé au dispositif 65, un second ordinateur 70 raccordé au dispositif 72, une imprimante distante 66 raccordée à l'extension 67 et un modem-routeur distant 73 raccordé à l'extension 74. Les appareils informatiques sont capables de fonctionner ensemble au moyen d'une solution de mise en réseau extérieure à l'invention par exemple par WIFI, par réseau local filaire, par courants-porteurs etc.
Chaque dispositif 65, 72 et chaque extension 67, 74 selon l'invention intègre un moyen pour lui assigner un code de réseau. Chaque dispositif 65, 72 intègre un moyen de communication, fonctionnant au moins en émission, par exemple un émetteur radio dans la bande ISM, lui permettant de transmettre des messages de commandes à une ou plusieurs extensions associées 67, 74. Chaque extension comprend un moyen de communication, fonctionnant au moins en réception, agencé pour recevoir les messages de commandes émis par les dispositifs selon l'invention et ne prendre en compte que les messages en rapport avec le même code de réseau.
En outre, les dispositifs peuvent avantageusement intégrer des moyens de réception radio et de décodage appropriés pour recevoir les commandes de mise en marche provenant d'un moyen de commande déporté 12 sans fil tel qu'illustré dans le cas du dispositif 65. Le moyen de commande déporté sans fil intègre un bouton 11, un émetteur radio et des moyens de codage appropriés. La création de l'association unissant chaque moyen de commande déporté avec le dispositif selon l'invention qui lui est assigné peut avantageusement mettre en oeuvre des boutons poussoirs 60, 63 et une procédure d'appui dans un laps de temps donné sur les boutons d'une commande déportée et du dispositif selon l'invention choisi pour que ce dernier enregistre le code unique de l'émetteur qui lui est associé. Tout autre moyen d'assignation d'un code identique pour l'émetteur et pour le récepteur associé peut convenir comme par exemple des roues codeuses, des interrupteurs multiples. L'éventuel moyen de commande déportée 12 peut aussi être raccordé au dispositif par un câble tel qu'illustré dans le cas du dispositif 72.
Lesdites extensions, qui n'intègrent pas a priori de moyens de mesure, sont agencées pour mettre sous tension les appareils raccordés tant qu'au moins un dispositif principal possédant le même code de réseau est dans l'état marche et pour mettre hors tension les appareils raccordés lorsque tous les dispositifs principaux ayant le même code de réseau sont à l'arrêt. Un moyen simple d'obtenir le fonctionnement attendu est d'agencer les dispositifs selon l'invention pour qu'ils envoient de manière répétée sans interruption un message de commande, codée en fonction du code de réseau choisi, seulement lorsque ces dispositifs sont dans l'état où ledit groupe fonctionnel local est sous tension. Les extensions qui reçoivent des messages de commandes correspondant au même code de réseau qu'elles, mettent sous tension les appareils externes qui y sont raccordés et réinitialise une temporisation interne. En l'absence de réception de message correspondant au même code de réseau pendant un temps déterminé, la temporisation interne arrive à échéance et provoque la mise hors tension des appareils externes raccordés. La durée de la temporisation sera choisie pour que la probabilité soit quasi nulle de ne pas recevoir au moins un message de commande valide d'au moins un dispositif dans l'état sous tension du même réseau. Dans la pratique, une temporisation de l'ordre de 10 minutes peut convenir. On améliore notablement la probabilité de bon fonctionnement en réduisant les risques de collisions des messages en répétant les émissions à des instants aléatoires ou à une fréquence susceptible de varier dans le temps ou d'un produit à l'autre par exemple en incorporant dans le générateur de fréquence un élément variable tel qu'une thermistance ou en rendant la fréquence dépendante d'une tension non précisément régulée.
Outre leur capacité d'asservissement d'extensions distantes 67, 74, les dispositifs 65, 72 offrent localement les fonctionnalités de base de l'invention. Ainsi lorsque l'utilisateur met sous tension l'unité centrale 61 par appui sur le bouton 11 puis démarre l'ordinateur par les moyens prévus à cet effet, les appareils 62 formant le groupe fonctionnel local sont alimentés. Ces appareils 62 étant mis hors tension ainsi que l'unité centrale lorsque cette dernière est mise en veille ou à l'arrêt. Même chose pour les appareils raccordés au dispositif selon l'invention 74.
Bien entendu, l'invention n'est pas limitée aux exemples qui viennent d'être décrits et de nombreux aménagements peuvent être apportés à ces exemples sans sortir du cadre de l'invention, notamment en ce qui concerne le calcul et le réglage du ou des seuils de décision, du nombre, du type et de la position des connecteurs, la manière de déporter les commandes et/ou de créer des liens d'association, de transmettre et/ou de coder l'information au sein d'un réseau de dispositifs selon l'invention.

## Revendications

1. Dispositif pour économiser de l'énergie par la suppression de la consommation électrique en veille d'un groupe fonctionnel d'au moins un appareil externe, comprenant un appareil principal, ledit dispositif incorporant des moyens de connexion au réseau électrique, des moyens pour alimenter ses ressources internes, des moyens de connexion pour alimenter au moins un appareil externe, des moyens de commutation de puissance pour alimenter ou non l'au moins un appareil externe, un moyen de commande pour mettre sous tension l'au moins un appareil externe, des moyens de mesure donnant une information représentative de la puissance consommée par l'au moins un appareil externe, des moyens de comparaison de cette information avec un seuil prédéterminé, des moyens de maintien inconditionnel de l'état sous tension de l'au moins un appareil externe pendant un temps prédéterminé, et des moyens de prise de décision pour maintenir l'état sous tension de l'au moins un appareil externe tant que la puissance consommée est supérieure à un seuil prédéterminé et pour mettre automatiquement hors tension l'au moins un appareil externe, y compris ledit appareil principal, quand la puissance consommée est inférieure à un seuil prédéterminé, **caractérisé en ce que** le dispositif est agencé pour fonctionner au moins avec certains ordinateurs et avec au moins certains téléviseurs, **en ce que** ledit moyen de commande (11) pour mettre sous tension l'au moins un appareil externe est exclusivement dédié au dispositif selon l'invention et **en ce que** le dispositif comprend un microcontrôleur, ce microcontrôleur comprenant les moyens de mesure, les moyens de comparaison, les moyens de maintien inconditionnel et les moyens de prise de décision, **en ce que** lesdits moyens de mesure comprennent des moyens numériques moyennant la mesure sur une durée très supérieure au cycle du courant alternatif du réseau électrique, ladite durée étant suffisante pour rendre le dispositif peu sensible à la forme d'onde du courant circulant dans la charge externe sur laquelle porte la mesure.

2. Dispositif selon la revendication 1 **caractérisé en ce qu'**il comprend en outre au moins un moyen de commande supplémentaire (12, 13) pour mettre sous tension l'au moins un appareil externe.

3. Dispositif selon l'une quelconque des revendications précédentes, **caractérisé en ce que** les moyens de mesure embarqués donnent une information représentative de la puissance consommée par seulement l'appareil dit principal au sein du groupe fonctionnel d'au moins un appareil externe.

4. Dispositif selon l'une quelconque des revendications précédentes, **caractérisé en ce que** les moyens pour alimenter les ressources internes du dispositif selon l'invention comprenant au moins un condensateur (18) comme élément série destiné à faire chuter la tension du réseau électrique.

5. Dispositif selon l'une quelconque des revendications précédentes, **caractérisé en ce qu'**il comprend en outre des moyens de réglage de la durée de la temporisation additionnelle de maintien sous tension des appareils externes.

6. Dispositif selon l'une quelconque des revendications précédentes, **caractérisé en ce qu'**il comprend un circuit de puissance ne mettant en oeuvre que des composants passifs (4, 5).

7. Dispositif selon l'une quelconque des revendications précédentes, **caractérisé en ce qu'**il comprend un réglage discret des seuils de prise de décision à au moins deux positions (28).

8. Dispositif selon l'une quelconque des revendications précédentes, **caractérisé en ce qu'**il comprend un réglage automatique des seuils de prise de décision par une phase préalable d'apprentissage des caractéristiques de consommation en veille et/ou en opération d'au moins ledit appareil principal au sein du groupe fonctionnel d'au moins un appareil externe.

9. Dispositif selon l'une quelconque des revendications précédentes, **caractérisé en ce qu'**il comprend en outre des moyens pour mettre automatiquement hors tension l'au moins un appareil externe, y compris ledit appareil principal, quand la puissance consommée est supérieure à un seuil prédéterminé en fonction d'au moins une caractéristique du dispositif.

10. Dispositif selon l'une quelconque des revendications précédentes, **caractérisé en ce qu'**il comprend en outre des moyens pour empêcher une nouvelle mise sous tension de l'au moins un appareil externe avant que ne se soit écoulé un temps suffisant après sa mise à l'arrêt.

11. Dispositif selon l'une quelconque des revendications précédentes, **caractérisé en ce qu'**il comprend en outre un moyen pour mettre à l'arrêt manuellement l'au moins un appareil externe avant l'arrivée à échéance de la temporisation d'arrêt automatique.

12. Dispositif selon l'une quelconque des revendications précédentes, **caractérisé en ce qu'**il comprend une horloge (55) alimentée par des moyens autonomes, et des moyens de programmation (54, 55) de plages temporelles de mise sous tension autorisées de l'au moins un appareil externe et de plages temporelles de mise sous tension interdites.

13. Dispositif selon l'une quelconque des revendications précédentes, **caractérisé en ce qu'**il comprend des moyens de verrouillage physique (48, 49, 52) d'au moins la prise de l'appareil principal (51) ainsi que des moyens de verrouillage physiques ou logiques (49, 56) des moyens permettant la mise en marche les appareils raccordés.

14. Dispositif (65, 72) selon l'une quelconque des revendications précédentes, **caractérisé en ce qu'**il comprend en outre des moyens d'asservissement à distance d'une ou de plusieurs extensions (67, 74) associées au sein d'un réseau.

15. Dispositif (65, 72) selon la revendication 14, **caractérisé en ce que** les extensions (67, 74) associées sont agencées pour mettre sous tension les appareils qui y sont raccordés, tant qu'au moins un dispositif au sein du même réseau est lui-même dans l'état où ledit groupe fonctionnel qui y est directement raccordé est sous tension, et pour mettre hors tension les appareils qui y sont raccordés lorsque tous les dispositifs au sein du même réseau sont dans l'état où les groupes fonctionnels qui y sont directement raccordés sont hors tension.

16. Dispositif selon l'une quelconque des revendications précédentes, **caractérisé en ce qu'**il comprend en outre des moyens de mesure ou d'évaluation de la consommation d'énergie des appareils externes raccordés au dispositif selon l'invention, et des moyens de présentation de cette information (55) à l'utilisateur en unités de mesure physique et/ou monétaire et/ou par retour d'une information sensorielle en relation avec la quantité d'énergie ne faisant référence à aucune unité.

17. Dispositif selon l'une quelconque des revendications précédentes, **caractérisé en ce qu'**il comprend en outre des moyens d'évaluation des économies réalisées par l'utilisation du dispositif selon l'invention, et des moyens de présentation de cette information (55) à l'utilisateur en unités de mesure physique et/ou monétaire et/ou par retour d'une information sensorielle en relation avec la quantité d'énergie ne faisant référence à aucune unité.

18. Dispositif selon l'une quelconque des revendications précédentes, **caractérisé en ce qu'**il comprend en outre des moyens de connexion multiples (8, 9, 50) et/ou spécialisés par usage (7, 10) pour raccorder les appareils externes.

19. Dispositif selon l'une quelconque des revendications précédentes, **caractérisé en ce qu'**il peut être associé à un autre dispositif assurant des fonctions complémentaires esthétiques (14, 58) et/ou fonctionnelles (57) et/ou en tant que support de communication (59).

## Patentansprüche

1. Vorrichtung zur Energieeinsparung durch die Unterdrückung der Leistungsaufnahme im Standby-Betrieb einer funktionellen Gruppe mindestens eines externes Geräts, zu dem ein Hauptgerät gehört, die genannte Vorrichtung umfasst Mittel zum Anschluss an das Stromnetz, Mittel zur Stromversorgung ihrer internen Ressourcen, Anschlussmittel zur Stromversorgung mindestens eines externen Geräts, Leistungsschalteinrichtungen um die Stromversorgung mindestens eines externen Geräts ein- bzw. auszuschalten, ein Steuerelement, um mindestens ein externes Geräts einzuschalten, Messmittel, die repräsentative Angaben zur Leistungsaufnahme mindestens eines externen Geräts machen, Mittel zum Vergleich dieser Angaben mit einem vorgegebenen Schwellenwert, Mittel zum bedingungslosen Aufrechterhalten des Spannungszustands mindestens eines externen Geräts während eines vorbestimmten Zeitraums, und Mittel zum Treffen der Entscheidung zur Aufrechterhaltung des Spannungszustands mindestens eines externen Geräts, solange die Aufnahmeleistung über einem vorgegebenen Schwellenwert liegt und um automatisch mindestens ein externes Geräts auszuschalten, einschließlich des genannten Hauptgeräts, wenn die Leistungsaufnahme unter einem vorgegebenen Schwellenwert liegt, und **dadurch gekennzeichnet, dass** die Vorrichtung für den Betrieb mindestens mit einigen Computern und mit mindestens einigen Fernsehern ausgelegt ist, **dadurch gekennzeichnet, dass** das genannte Steuerelement (11) zum Einschalten mindestens eines externen Geräts ausschließlich für die erfindungsgemäße Vorrichtung bestimmt ist und **dadurch gekennzeichnet, dass** die Vorrichtung einen Mikrocontroller umfasst, dieser Mikrocontroller umfasst die Messmittel, die Vergleichsmittel, die Mittel für das bedingungslose Aufrechterhalten des Spannungszustands und die Mittel zum Treffen der Entscheidung, **dadurch gekennzeichnet, dass** die genannten Messmittel digitale Mittel umfassen, die die Messung für einen längeren Zeitraum als die Periode des Wechselstroms des Stromnetzes ermöglichen, da die genannte Dauer unzureichend ist, um die Vorrichtung wenig empfindlich gegenüber der Wellenform des Stroms zu machen, der durch die externe Last fließt, auf die sich die Messung bezieht.

2. Vorrichtung nach Anspruch 1, die **dadurch gekennzeichnet ist, dass** sie des Weiteren mindestens ein zusätzliches Steuerelement umfasst (12, 13), um mindestens ein externes Gerät einzuschalten.

3. Vorrichtung nach einem der vorgenannten Ansprüche, die **dadurch gekennzeichnet ist, dass** die eingebetteten Messmittel repräsentative Angaben zur Leistungsaufnahme von ausschließlich dem genannten Hauptgerät innerhalb der funktionellen Gruppe mindestens eines externen Geräts machen.

4. Vorrichtung nach einem der vorgenannten Ansprüche, die **dadurch gekennzeichnet ist, dass** die Mittel zur Stromversorgung der internen Ressourcen der erfindungsgemäßen Vorrichtung standardmäßig mindestens einen Kondensator (18) enthält, um die Spannung des Stromnetzes herabzusetzen.

5. Vorrichtung nach einem der vorgenannten Ansprüche, die **dadurch gekennzeichnet ist, dass** sie des Weiteren Mittel zur Einstellung der Dauer der weiteren Verzögerung der Aufrechterhaltung des Spannungszustands der externen Geräte umfasst.

6. Vorrichtung nach einem der vorgenannten Ansprüche, die **dadurch gekennzeichnet ist, dass** sie einen Leistungskreis umfasst, der nur passive Bauelemente (4, 5) bedient.

7. Vorrichtung nach einem der vorgenannten Ansprüche, die **dadurch gekennzeichnet ist, dass** sie eine diskrete Einstellung der Obergrenzen für die Entscheidungsfindung mit mindestens zwei Positionen (28) umfasst.

8. Vorrichtung nach einem der vorgenannten Ansprüche, die **dadurch gekennzeichnet ist, dass** sie eine automatische Einstellung der Obergrenzen für die Entscheidungsfindung durch eine vorangehende Lernphase der Eigenschaften des Verbrauchs im Standby-Betrieb und/oder im Betrieb mindestens des genannten Hauptgeräts innerhalb der funktionellen Gruppe mindestens eines externen Geräts umfasst.

9. Vorrichtung nach einem der vorgenannten Ansprüche, die **dadurch gekennzeichnet ist, dass** sie des Weiteren Mittel umfasst, um automatisch mindestens ein externes Gerät auszuschalten, einschließlich das genannte Hauptgerät, wenn die Leistungsaufnahme über einem vorgegebenen Schwellenwert liegt gemäß mindestens einer Eigenschaft der Vorrichtung.

10. Vorrichtung nach einem der vorgenannten Ansprüche, die **dadurch gekennzeichnet ist, dass** sie des Weiteren Mittel umfasst, um ein erneutes Einschalten mindestens eines externen Geräts zu verhindern, bevor nicht genügend Zeit nach seinem Ausschalten verstrichen ist.

11. Vorrichtung nach einem der vorgenannten Ansprüche, die **dadurch gekennzeichnet ist, dass** sie des Weiteren ein Mittel umfasst, um manuell mindestens ein externes Gerät auszuschalten vor Ablauf der automatischen Abschaltverzögerung.

12. Vorrichtung nach einem der vorgenannten Ansprüche, die **dadurch gekennzeichnet ist, dass** sie eine Uhr (55) umfasst, die durch autonome Mittel mit Strom versorgt wird, und Programmiermittel (54, 55) für zulässige Zeitbereiche für das Einschalten mindestens eines externen Geräts und verbotene Zeitbereiche für das Einschalten.

13. Vorrichtung nach einem der vorgenannten Ansprüche, die **dadurch gekennzeichnet ist, dass** sie Mittel für das physische Verriegeln (48, 49, 52) mindestens der Buchse des Hauptgeräts (51) umfasst sowie Mittel für das physische oder logische Verriegeln (49, 56) der Mittel, die das Einschalten der angeschlossenen Geräte ermöglichen.

14. Vorrichtung (65, 72) nach einem der vorgenannten Ansprüche, die **dadurch gekennzeichnet ist, dass** sie des Weiteren Mittel zum Regeln per Fernbedienung einer oder mehrerer Erweiterungen (67, 74) umfasst, die innerhalb eines Netzes zugeordnet sind.

15. Vorrichtung (65, 72) nach Anspruch 14, die **dadurch gekennzeichnet ist, dass** die zugeordneten Erweiterungen (67, 74) so ausgelegt sind, dass die daran angeschlossenen Geräte eingeschaltet werden, solange mindestens eine Vorrichtung innerhalb des gleichen Netzes die genannte, direkt daran angeschlossene funktionelle Gruppe, eingeschaltet hält, und damit die daran angeschlossenen Geräte ausgeschaltet werden, wenn alle Vorrichtungen innerhalb des gleichen Netzes die direkt daran angeschlossenen funktionellen Gruppen ausgeschaltet haben.

16. Vorrichtung nach einem der vorgenannten Ansprüche, die **dadurch gekennzeichnet ist, dass** sie des Weiteren Mittel umfasst für die Messung oder Bewertung der Leistungsaufnahme der externen Geräte, die mit der erfindungsgemäßen Vorrichtung verbunden sind, und Mittel zur Darstellung dieser Angaben (55) für den Anwender in physikalischen Messeinheiten und/oder Währungseinheiten und/oder durch Rückgabe einer sensorischen Information im Zusammenhang mit der Strommenge, ohne Bezugnahme auf eine jedwede Einheit.

17. Vorrichtung nach einem der vorgenannten Ansprüche, die **dadurch gekennzeichnet ist, dass** sie des Weiteren Mittel umfasst für die Bewertung der Einsparungen durch die Verwendung der Vorrichtung gemäß der Erfindung, und Mittel zur Darstellung dieser Angaben (55) für den Anwender in physikalischen Messeinheiten und/oder Währungseinheiten und/oder durch Rückgabe einer sensorischen Information im Zusammenhang mit der Strommenge, ohne Bezugnahme auf eine jedwede Einheit.

18. Vorrichtung nach einem der vorgenannten Ansprüche, die **dadurch gekennzeichnet ist, dass** sie des Weiteren multiple Anschlussmittel (8, 9, 50) und/oder spezielle Anschlussmittel je Gerätekategorie (7, 10) zum Anschluss der externen Geräte umfasst.

19. Vorrichtung nach einem der vorgenannten Ansprüche, die **dadurch gekennzeichnet ist, dass** sie mit einer anderen Vorrichtung verbunden werden kann, die ergänzende ästhetische (14, 58) und/oder funktionelle (57) Funktionen übernimmt und/oder als Kommunikationsmedium (59) fungiert.

## Claims

1. A device for saving energy by eliminating electricity consumption on standby for a functional group of at least one external appliance, comprising one main appliance, said device incorporating means for connection to the electricity network, means for supplying its internal resources, connection means for powering at least one external appliance, power switching means for powering or not the at least one external appliance, one control means for supplying power to the at least one external appliance, measuring means for providing information representative of the power consumed by the at least one external appliance, means for comparing this information with a predetermined threshold, means for holding unconditionally the power supply of the at least one external appliance for a predetermined time, and means of decision making for maintaining the power supply of the at least one external appliance as the power consumption is greater than a predetermined threshold and to stop automatically the power supply to the at least one external appliance, including said main appliance, when the power consumption is less than a predetermined threshold, **characterized in that** the device is arranged to operate at least with some computers and with at least some television sets, **in that** said control means (11) for supplying power to the at least one external appliance is exclusively dedicated to the device according to the invention and **in that** the device comprises a microcontroller, the microcontroller comprising the measuring means, the comparing means, the unconditional holding means and the means for decision-making, **in that** said measuring means comprise digital means for averaging the measurement over a period which is very longer than the AC cycle of the electrical network, said period being sufficient for making the device few sensitive to the waveform of the current flowing through the external load on which the measurement is done.

2. A device according to claim 1 **characterized in that** it further comprises at least one additional control means (12, 13) supplying power to the at least one external appliance.

3. A device according to any one of the preceding claims, **characterized in that** the onboard measurement means gives information representative of the power consumed by only said one main appliance within the functional group of at least one external appliance.

4. A device according to any one of the preceding claims, **characterized in that** the means for supplying the internal resources of the device according to the invention comprises at least one capacitor (18) as series element intended to lower mains voltage.

5. A device according to any one of the preceding claims, **characterized in that** it further comprises means for adjusting the duration of the additional timeout for maintaining the power supply of the external appliances.

6. A device according to any one of the preceding claims, **characterized in that** it comprises a power circuit implementing only passive components (4, 5).

7. A device according to any one of the preceding claims, **characterized in that** it comprises a discrete setting of the thresholds of decision making at least two positions (28).

8. A device according to any one of the preceding claims, **characterized in that** it comprises an automatic setting of the thresholds of decision making by a prior learning step of the characteristics of consumption in standby and/or in operation of said main appliance within the functional group of at least one external appliance.

9. A device according to any one of the preceding claims, **characterized in that** it further comprises means for automatically stopping the power supply to the at least one external appliance, including said main appliance, when the power consumption is greater than a predetermined threshold based on at least one characteristic of the device.

10. A device according to any one of the preceding claims, **characterized in that** it further comprises means for preventing further supply of power to the at least one external appliance before a sufficient time has elapsed after having stopped its power supply.

11. A device according to any one of the preceding claims, **characterized in that** it further comprises means for stopping manually the power supply to the at least one external appliance before that the automatic stopping timeout expires.

12. A device according to any one of the preceding claims, **characterized in that** it comprises a clock (55) supplied by autonomous means, and programming means (54, 55) of time slots where the power supply to the at least one external appliance is allowed and of time slots where power supply is forbidden.

13. A device according to any one of the preceding claims, **characterized in that** it comprises physical locking means (48, 49, 52) of at least the power inlet of the main appliance (51) as well as physical or logic locking means (49, 56) of the means which allow the power supply of the connected devices.

14. A device (65, 72) according to any one of the preceding claims, **characterized in that** it further comprises remote servo means of one or more extensions (67, 74) which are associated within a network.

15. A device (65, 72) according to claim 14, **characterized in that** the associated extensions (67, 74) are arranged for supplying power to the appliances connected thereto, as at least one device within the same network is itself in the functional state where said functional group which is directly connected to it is supplied, and for stopping supplying power to the appliances connected thereto when all the devices within the same network are in the functional state where the supply of the functional groups that are directly connected to them is stopped.

16. A device according to any one of the preceding claims, **characterized in that** it further comprises means for measuring or evaluating the energy consumption of the external appliances connected to the device according to the invention, and means for presenting this information (55) to the user in physical units of measurement and/or monetary and/or by the return of a sensorial information in relation with the amount of energy making no reference to any unit.

17. A device according to any one of the preceding claims, **characterized in that** it further comprises means for evaluating the savings made by the use of the device according to the invention, and means for presenting this information (55) to the user in physical units of measurement and/or monetary and/or by the return of a sensorial information in relation with the amount of energy making no reference to any unit.

18. A device according to any one of the preceding claims, **characterized in that** it further comprises multiple connection means (8, 9, 50) and/or specialized by type of use (7, 10) for connecting external appliances.

19. A device according to any one of the preceding claims, **characterized in that** it can be associated to another device providing aesthetic complementary functions (14, 58) and/or functional (57) and/or as a communication medium (59).
